# EUROPEAN PATENT APPLICATION

(11) **EP 4 701 003 A1**
(43) Date of publication of application: **25.02.2026**
(21) Application number: 24830280.4
(22) Date of filing: 21.05.2024
(51) Int. Cl.: H01R 24/00, H01R 13/629, H01R 13/639, H01R 13/73, H01R 13/502, B60N 2/90, B60R 16/02

(54) **PLUGGABLE CONNECTOR DEVICE AND VEHICLE SEAT**

(30) Priority: 26.06.2023 CN 202310758241; 08.02.2024 CN 202410176278
(71) Applicant: Yanfeng International Automotive Technology Co., Ltd., Shanghai 201306 (CN)
(72) Inventor: MAO, Jun, Shanghai 201306 (CN); XU, Chao, Shanghai 201306 (CN); ZHANG, Shuai, Shanghai 201306 (CN); MAO, Aihua, Shanghai 201306 (CN); LIU, Meng, Shanghai 201306 (CN); DING, Shaohua, Huizhou, Guangdong 516023 (CN)
(74) Representative: Colombo, Stefano Paolo
(86) International application number: PCT/CN2024/094318
(87) International publication number: WO 2025/001632

(57) **Abstract**

The invention discloses a pluggable connector device, which comprises a male terminal connector assembly. The male terminal connector assembly includes a headrest rod sleeve assembly, a male terminal connector, and a male terminal connector wire harness electrically connected to the male terminal connector. The headrest rod sleeve assembly can be fixed on a seat back frame, and the male terminal connector is pre-installed in the headrest rod sleeve assembly. The male terminal connector is configured to follow the female terminal connector to enter and exit the headrest rod sleeve assembly after being combined with the headrest rod and the female terminal connector. The male terminal connector is further configured to return to the headrest rod sleeve assembly and be in a pre-installed state after the female terminal connector is disconnected from the male terminal connector. The male terminal connector of the invention can move up and down with the headrest rod (without disassembling the seat back) and be pulled out of and reinserted into the headrest rod sleeve assembly, so that the male terminal connector is not easily damaged. In addition, the male terminal connector and the female terminal connector of the invention can be automatically locked and unlocked.

## Description

The present invention is based on the applications with Chinese patent application numbers CN202310758241.1 (filing date: June 26, 2023) and CN202410176278.8 (filing date: February 8, 2024), and claims the priority thereof. The disclosures of these Chinese applications are incorporated herein in their entirety.

### Technical Field

The present invention relates to the technical field of seats, and in particular to a pluggable connector device and a vehicle seat. The pluggable connector device is used for a seat headrest rod, and is especially a pre-installable pluggable connector device.

### Background of Invention

Currently, users have increasingly diverse demands for automotive seats, requiring headrests to be equipped with audio, electric adjustment functions, and heating functions. The adoption of traditional connection solutions will inevitably result in headrests with electrical functions failing to meet the requirement of free detachable installation.

Japanese Patent Application JP2008-49820 discloses an example of a lead wire connection structure for such a headrest. In this invention, a structure is adopted in which a first connector constituting a connection terminal of a lead wire connected to an electrical component disposed on the headrest side is coupled with a second connector constituting a connection terminal of an extended lead wire, which is disposed on the seat back side from the vehicle body side.

Specifically, the first connector is arranged to penetrate into the interior of a headrest strut that is configured to fixedly mount the headrest on the seat back. The headrest strut is formed to penetrate internally like a tube, and retains the first connector (with wires threaded through it) at its mouth (opening on the lower end side). On the other hand, the second connector is disposed at the lower part of a headrest support member into which the headrest strut is inserted and retained, and is held by a retainer fixedly integrated with the seat back. Therefore, the second connector is in a standby state, i.e., when the headrest strut is subsequently inserted into the headrest support member, the second connector is ready to be connected to the first connector retained at the mouth of the headrest strut. Here, the second connector is configured to disengage from the retainer when pushed by the insertion force of the headrest strut after the insertion operation of the headrest strut, thereby connecting the first connector to the second connector.

However, in the vehicle seat disclosed in the Japanese Patent Application JP2008-49820, it is necessary to hold a retainer for holding the second connector beside the headrest support member.

In another Japanese Patent Application JP2011140263A discloses a headrest assembly structure that assembles the headrest to the seat back by inserting the struts of the headrest into a holding member assembled to the seat back. Even with a structure in which the struts can be assembled while waiting by a waiting member on the seat back side, a structure capable of efficiently assembling the headrest to the seat back is provided. The headrest is configured such that it can be assembled to the seat back while being supported in a standby state by a standby member on the seat back side. When the strut is inserted into the holding member with the standby member attached to the cover so that the standby member waits for the strut, the biasing member engages with the fitting portion of the strut, and the standby member is also attached to the strut by being assembled into the housing. Furthermore, when the strut is inserted, the standby member is separated from the cover and attached only to the strut.

U.S. Patent Application US10569685B2 discloses a vehicle seat equipped with a seat back having a mounting portion, a headrest having a headrest frame and electronic components, a first connector, and a second connector. The first connector has an engaging portion that engages with a hole of the headrest frame, a protrusion that engages with the second connector, and a first connector terminal electrically connected to a lead wire of the electronic component. The second connector has a first engaging piece that engages with a hole of a guide bracket from the outside of the guide bracket, a second engaging piece that engages with the protrusion of the first connector from the outside of the first connector, and a second connector terminal electrically connected to a lead wire routed in the seat back and the first connector terminal. The engagement between the hole of the mounting portion and the first engaging piece of the second connector can be irreversibly released.

A problem exists in the above-mentioned prior art that the headrest cannot be completely pulled out and reinserted freely in the entire vehicle state (without disassembling the seat back). In addition, the male terminal connector of the above-mentioned prior art is easily damaged on the headrest guide rod. Furthermore, in the above-mentioned prior art, the male terminal connector cannot be pre-installed during seat production.

### Summary of Invention

An object of the present invention is to provide a pluggable connector device and a vehicle seat including the same, wherein the pluggable connector device can realize pre-installation of a male terminal connector during seat production, thereby solving the problem that the male terminal connector cannot be pre-installed during seat production in the prior art.

Furthermore, another object of the present invention is to provide a pluggable connector device capable of automatically unlocking and locking the male terminal connector and the female terminal connector.

To achieve the above object, the pluggable connector device of the present invention includes a male terminal connector assembly. The male terminal connector assembly includes a male terminal connector, and a male terminal connector wire harness electrically connected to the male terminal connector, characterized in that the headrest rod sleeve assembly can be fixed on a seat back frame; wherein the male terminal connector is pre-installed in the headrest rod sleeve assembly; wherein the male terminal connector is configured to follow the female terminal connector to enter and exit the headrest rod sleeve assembly after the male terminal connector is combined with the headrest rod and the female terminal connector; wherein the male terminal connector is further configured to return to the headrest rod sleeve assembly and be in a pre-installed state after the female terminal connector is disconnected from the male terminal connector. The male terminal connector assembly is preferably a pre-installable male terminal connector assembly in which the male terminal connector is pre-installed.

In a preferred embodiment of the present invention, at least one locking piece is installed in the headrest rod sleeve assembly, wherein the male terminal connector can be locked in the headrest rod sleeve assembly through the locking piece to keep the male terminal connector in a pre-installed state; preferably, when the male terminal connector follows the female terminal connector to extend out of the headrest rod sleeve assembly after the male terminal connector is combined with the headrest rod and the female terminal connector, the locking piece can be bounced open to disengage from contact with the male terminal connector and unlock the male terminal connector; preferably, when the male terminal connector returns to the pre-installed state after the female terminal connector is disconnected from the male terminal connector, the locking piece can elastically reset to re-lock the male terminal connector and keep the male terminal connector in the pre-installed state.

In a preferred embodiment of the present invention, two locking pieces are provided, wherein the two locking pieces are circumferentially installed in the headrest rod sleeve assembly.

In a preferred embodiment of the present invention, two locking piece mounting portions are circumferentially provided on the headrest rod sleeve assembly, wherein each locking piece is installed in one locking piece mounting portion respectively.

In a preferred embodiment of the present invention, the locking piece mounting portion includes a locking piece mounting groove configured to install the locking piece therein; preferably, the locking piece mounting portion further includes a snap opening communicating with the first end of the locking piece mounting groove; wherein an elastic fixing portion is provided at the first end of the locking piece, wherein when the locking piece is installed in the locking piece mounting groove, the elastic fixing portion can be snapped into the snap opening to prevent the locking piece from falling out of the locking piece mounting groove.

In a preferred embodiment of the present invention, a limiting portion is further provided at the first end of the locking piece, wherein a limiting rib is provided at the first end of the locking piece mounting groove; wherein after the locking piece is installed in the locking piece mounting groove, the limiting rib can contact the limiting portion to limit the movement of the locking piece in its length direction.

In a preferred embodiment of the present invention, an outwardly protruding elastic snap protrusion is provided at the middle position of the locking piece, wherein the elastic snap protrusion can be in locking contact with the male terminal connector to keep the male terminal connector in the pre-installed position in the headrest rod sleeve assembly; preferably, when the male terminal connector follows the female terminal connector to enter and exit the headrest rod sleeve assembly after the male terminal connector is combined with the headrest rod and the female terminal connector, the elastic snap protrusion can elastically deform to disengage from contact with the male terminal connector or re-contact with the male terminal connector.

In a preferred embodiment of the present invention, a first upper inclined surface and a first lower inclined surface are respectively provided on the upper and lower sides of the elastic snap protrusion; wherein when the male terminal connector contacts and acts with the first upper inclined surface, it can drive the elastic snap protrusion to deform, and make the elastic snap protrusion disengage from contact with the male terminal connector, enabling the male terminal connector to follow the female terminal connector to exit the headrest rod sleeve assembly; wherein when the male terminal connector contacts and acts with the first lower inclined surface, it can drive the elastic snap protrusion to deform, enabling the male terminal connector to pass over the elastic snap protrusion, return to the pre-installed state, and be confined to the pre-installed position by the elastic snap protrusion.

In a preferred embodiment of the present invention, a limiting groove is provided in the locking piece mounting groove, wherein the limiting groove is adapted to the shape of the elastic snap protrusion; wherein the elastic snap protrusion can be limited to move within the limiting groove so as to prevent the elastic snap protrusion from popping out excessively.

In a preferred embodiment of the present invention, the second end of the locking piece opposite to the first end is a free end.

In a preferred embodiment of the present invention, the male terminal connector includes a male terminal connector body having a male terminal mounting portion and a wire harness connecting portion; wherein the male terminal wire harness can be electrically connected to the wire harness connecting portion; wherein at least one fixing snap protrusion is provided on the outer periphery of the wire harness connecting portion, wherein the fixing snap protrusion can cooperate with the elastic snap protrusion to limit the male terminal connector in the pre-installed position; wherein when the male terminal connector follows the female terminal connector to enter and exit the headrest rod sleeve assembly, the fixing snap protrusion can drive the elastic snap protrusion to deform.

In a preferred embodiment of the present invention, a second upper inclined surface and a second lower inclined surface are respectively provided on the upper and lower sides of the fixing snap protrusion; wherein when the second lower inclined surface contacts the first lower inclined surface, the male terminal connector can be limited in the pre-installed position; preferably, when the male terminal connector is to exit the headrest rod sleeve assembly following the female terminal connector, the second lower inclined surface can drive the locking piece to expand outward through the first lower inclined surface, so that the fixing snap protrusion disengages from the limit of the elastic snap protrusion, thereby enabling the male terminal connector to follow the female terminal connector to exit the headrest rod sleeve assembly; preferably, when the male terminal connector re-enters the headrest rod sleeve assembly following the female terminal connector and the second upper inclined surface contacts the first lower inclined surface, the second upper inclined surface can drive the locking piece to expand outward through the first lower inclined surface, so that the fixing snap protrusion passed over the elastic snap protrusion, thereby returning the male terminal connector to the pre-installed position.

In a preferred embodiment of the present invention, the male terminal connector wire harness can be inserted into the wire harness connecting portion and tightened or clamped by a cable tie or a clamp.

In a preferred embodiment of the present invention, at least one guide groove is provided in the headrest rod sleeve assembly, wherein the locking piece mounting groove is provided in the guide groove; wherein at least one guide structure is provided on the outer periphery of the wire harness connecting portion, wherein the fixing snap protrusion is provided on the guide structure, wherein the guide structure can move in the guide groove.

In a preferred embodiment of the present invention, a spring mounting groove is provided in the guide structure, wherein a clamp spring and a torsion spring are hinged in the spring mounting groove; wherein one end of the torsion spring acts on the guide structure, and the other end of the torsion spring acts on the clamp spring; wherein when the torsion spring is released, it can drive the clamp spring to lock the female terminal connector, so that the female terminal connector is combined with the male terminal connector; wherein when the female terminal connector needs to be disconnected from the male terminal connector, the clamp spring can disengage from the locking connection with the female terminal connector under the action of external force, and the torsion spring stores energy at this time.

In a preferred embodiment of the present invention, an introduction portion and a locking portion are provided at one end of the clamp spring; wherein when viewed in the vertical direction in the installed state, the introduction portion is located above the locking portion; wherein when the male terminal connector is inserted into the female terminal connector, the female terminal connector can drive one end of the clamp spring to expand outward through the introduction portion, so that the female terminal connector passes over the locking portion, such that the female terminal connector is fully combined with the male terminal connector and locked by the locking portion.

In a preferred embodiment of the present invention, an unlocking driving portion is provided at the other end of the clamp spring, wherein an inclined edge portion is provided in the spring mounting groove; wherein when the inclined edge portion interacts with the unlocking driving portion, on the one hand, it can limit the male terminal connector in the pre-installed position, and on the other hand, it can drive one end of the clamp spring to move in the unlocking direction through the unlocking driving portion, so that the locking portion disengages from the locking connection with the female terminal connector; preferably, under the action of the torsion spring, the unlocking driving portion provided at the lower end of the clamp spring can contact the inclined edge portion in the spring mounting groove, thereby limiting the upward movement of the male terminal connector; preferably, during the upward pulling of the headrest rod, when the inclined edge portion in the spring mounting groove touches the unlocking driving portion provided at the lower end of the clamp spring, it can press the unlocking driving portion to contract inward, thereby expanding the locking portion provided at the upper end of the clamp spring outward, so that the locking portion disengages from the locking connection with the female terminal connector; preferably, the unlocking driving portion is of an arc structure.

In a preferred embodiment of the present invention, a conductive rod mounting hole is provided in the male terminal mounting portion and the wire harness connecting portion; wherein a male terminal conductive rod can be inserted into the conductive rod mounting hole; wherein the section of the male terminal conductive rod inserted into the male terminal mounting portion is electrically connected to the female terminal connector, wherein the section of the male terminal conductive rod inserted into the wire harness connecting portion is electrically connected to the male terminal connector wire harness.

In a preferred embodiment of the present invention, at least one male terminal mounting groove is circumferentially provided on the male terminal mounting portion; wherein the male terminal mounting groove is radially communicated with the conductive rod mounting hole and communicated with the outside of the male terminal mounting portion, wherein the male terminal mounting groove extends along the axial direction of the conductive rod mounting hole; preferably, a male terminal is installed in the male terminal mounting groove, wherein the male terminal is configured to be electrically connected to the male terminal conductive rod on the one hand and to the female terminal connector on the other hand.

In a preferred embodiment of the present invention, one end of the male terminal mounting groove extends into the wire harness connecting portion; preferably, male terminal limiting portions are provided at both ends of the male terminal mounting groove, and the male terminal can be axially limited in the male terminal mounting groove by the male terminal limiting portions at both ends of the male terminal mounting groove.

In a preferred embodiment of the present invention, a snapping edge is provided at one end of the male terminal, and an elastic snap portion is provided at the other end; wherein the snapping edge and the elastic snap portion can respectively contact the male terminal limiting portions at both ends of the male terminal mounting groove to axially limit the male terminal in the male terminal mounting groove.

In a preferred embodiment of the present invention, an elastic conductive contact portion is provided at the middle position of the male terminal; wherein the elastic conductive contact portion can be electrically connected to the female terminal connector; wherein while the elastic conductive contact portion is electrically connected to the female terminal connector, the male terminal is electrically connected to the male terminal conductive rod by virtue of the pressure of the elastic conductive contact portion.

In a preferred embodiment of the present invention, a headrest rod locking component is fixedly installed on the headrest rod sleeve assembly; wherein a locking pin mounting hole is provided in the headrest rod locking component; wherein a locking pin and a locking pin return spring are press-fitted in the locking pin mounting hole; wherein one end of the locking pin return spring acts on the locking pin, and the other end of the locking pin return spring acts on the headrest rod locking component.

In a preferred embodiment of the present invention, the male terminal connector includes a male terminal connector body, at least one male terminal installed on the male terminal connector body, and a male terminal connector wire harness; wherein a male terminal connection terminal is formed at the bottom end of each male terminal; preferably, a male terminal connector wire outlet is provided at the bottom of the male terminal connector body, wherein the male terminal connection terminal at the bottom end of the male terminal can be placed into the male terminal connector wire outlet; preferably, a snap-fit opening is provided at the bottom of the headrest rod sleeve assembly; during assembly, the male terminal connector wire outlet can be snapped into the snap-fit opening, wherein the socket on the male terminal connector wire harness can be inserted into the male terminal connector wire outlet, so that the male terminal connector wire harness is electrically connected to the male terminal.

The pluggable connector device of the present invention further includes a female terminal connector which can be installed on the headrest rod. After the male terminal connector is inserted into the female terminal connector and combined with the female terminal connector, electrical contact connection can be performed between the male terminal connector and the female terminal connector.

In a preferred embodiment of the present invention, the female terminal connector includes a female terminal connector body, at least one female terminal installed on the female terminal connector body, and a female terminal wire harness electrically connected to the female terminal; wherein the female terminal connector body can be sleeved and fixed in the internal cavity of the headrest rod; wherein the female terminal wire harness can pass through the internal cavity of the headrest rod to enter the headrest and be electrically connected to the electrical components provided at the headrest.

In a preferred embodiment of the present invention, at least one snap fit is provided on the outer periphery of the female terminal connector body; at least one mounting hole is circumferentially provided on the headrest rod; the snap fit can be snapped into the mounting hole, so that the female terminal connector body is sleeved and fixed in the internal cavity of the headrest rod.

In a preferred embodiment of the present invention, an error-proof rib is provided on the female terminal connector body, wherein an error-proof groove is provided on the headrest rod; wherein the error-proof rib can be placed into the error-proof groove, so that the female terminal connector body is error-proofly sleeved and fixed in the internal cavity of the headrest rod.

In a preferred embodiment of the present invention, a male terminal connector insertion hole is provided in the female terminal connector body, wherein the male terminal connector can be inserted into the male terminal connector insertion hole; preferably, at least one female terminal mounting portion is circumferentially provided on the hole wall of the male terminal connector insertion hole; wherein the female terminal can be installed in the female terminal mounting portion; wherein after the male terminal connector is inserted into the male terminal connector insertion hole, the female terminal can be electrically connected to the male terminal on the male terminal connector.

In a preferred embodiment of the present invention, limiting edges are respectively provided at both ends of the female terminal mounting portion; wherein the female terminal can be axially limited in the female terminal mounting portion by the limiting edges at both ends of the female terminal mounting portion.

In a preferred embodiment of the present invention, the female terminal includes an integrally formed female terminal support portion and a female terminal conductive contact portion; wherein after the female terminal support portion is folded from one end of the female terminal conductive contact portion to a state substantially parallel to the female terminal conductive contact portion, the female terminal support portion is fixed on the other end of the female terminal conductive contact portion; wherein the female terminal support portion can contact the female terminal mounting portion, wherein the female terminal conductive contact portion can be electrically connected to the male terminal on the male terminal connector; preferably, a female terminal wire harness welding portion is provided at the other end of the female terminal conductive contact portion; wherein the female terminal wire harness welding portion extends out of the female terminal connector body and is welded to the female terminal wire harness.

In a preferred embodiment of the present invention, the female terminal support portion is fixedly connected to the other end of the female terminal conductive contact portion through a flanging provided on the female terminal support portion.

In a preferred embodiment of the present invention, an elastic snap portion is provided on the female terminal conductive contact portion; wherein the elastic snap portion can contact the limiting edge of the female terminal mounting portion adjacent to one end of the female terminal wire harness welding portion.

In a preferred embodiment of the present invention, at least one wave portion is provided on the female terminal support portion; wherein the wave portion can contact the female terminal mounting portion to apply a certain elastic force to the female terminal conductive contact portion, thereby achieving better electrical contact with the male terminal on the male terminal connector.

In a preferred embodiment of the present invention, the headrest rod sleeve assembly can be snapped and fixed on the seat back frame.

In a preferred embodiment of the present invention, the headrest rod sleeve assembly includes a headrest guide sleeve and a sleeve member, wherein the headrest guide sleeve is configured to guide the headrest rod; wherein, the headrest guide sleeve and the sleeve member can be fixed at the frame bracket through the socket connection between the headrest guide sleeve, the hollow frame bracket and the sleeve member.

In a preferred embodiment of the present invention, the headrest guide sleeve can pass through the hollow frame bracket to enter the sleeve member and be fixedly connected to the sleeve member; wherein in the installed state, the frame bracket abuts against the headrest guide sleeve and the sleeve member with its respective end sides, thereby realizing the socket limit fixation of the headrest rod sleeve assembly.

In a preferred embodiment of the present invention, the sleeve member has a hollow portion at one end for receiving the frame bracket, wherein the bottom surface of the hollow portion is configured to abut against the frame bracket; wherein in the installed state, the side wall of the sleeve member located in the area of the hollow portion surrounds the frame bracket.

In a preferred embodiment of the present invention, the headrest guide sleeve can be fixedly connected to the sleeve member through a snapping structure.

In a preferred embodiment of the present invention, an opening for snapping is provided in the circumferential side wall of the sleeve member, wherein an elastically deformable snapping mechanism is circumferentially provided on the headrest guide sleeve; wherein the snapping mechanism is configured to be snapped into the opening for snapping of the sleeve member.

The object of the present invention is also achieved by a vehicle seat including the pluggable connector device according to any embodiment of the present invention.

By adopting the above technical solution, the male terminal connector of the present invention is pre-installed in the headrest rod sleeve assembly, and can move up and down following the headrest rod (without disassembling the seat back), and be pulled out and reinserted into the headrest rod sleeve assembly, so that the male terminal connector is not easily damaged. In addition, the male terminal connector and the female terminal connector of the present invention can be automatically locked and unlocked, making their electrical connection reliable.

### Brief Description of Drawings

Fig. 1 is a schematic external view of a headrest guide rod assembly of the present invention.
Fig. 2 is a schematic external view of a female terminal connector.
Fig. 3 is a schematic structural view of a seat frame without a pre-installed male terminal connector of the present invention.
Fig. 4 is a schematic external view of a headrest rod sleeve assembly of the present invention.
Fig. 5 is a schematic external view of a male terminal connector wire harness of the present invention.
Fig. 6 is a schematic external view of a headrest guide rod assembly pre-installed with a female terminal connector of the present invention.
Fig. 7 is a cross-sectional view taken along line A-A of Fig. 6.
Fig. 8 is a schematic structural view of a seat frame pre-installed with a male terminal connector of the present invention.
Fig. 9 is an enlarged schematic view of part I of Fig. 8.
Fig. 10 is a cross-sectional view taken along line B-B of Fig. 9.
Fig. 11 is a schematic structural view of a seat frame in which the female terminal connector is locked and connected after the headrest is installed.
Fig. 12 is an enlarged schematic view of part I of Fig. 11.
Fig. 13 is an enlarged schematic view of part I of Fig. 12.
Fig. 14 is a cross-sectional view taken along line C-C of Fig. 12.
Fig. 15 is a schematic structural view of a seat frame in which the headrest is continuously inserted into the male terminal connector and the male terminal connector is separated from the headrest rod sleeve assembly.
Fig. 16 is an enlarged schematic view of part I of Fig. 15.
Fig. 17 is an enlarged schematic view of part I of Fig. 16.
Fig. 18 is a cross-sectional view taken along line D-D of Fig. 16.
Fig. 19 is a schematic structural view of a seat frame in which the headrest is continuously inserted to the lower limit position.
Fig. 20 is an enlarged schematic view of part I of Fig. 19.
Fig. 21 is an enlarged schematic view of part I of Fig. 20.
Fig. 22 is a cross-sectional view taken along line E-E of Fig. 20.
Fig. 23 is a schematic structural view of a seat frame in which the headrest is pulled out to the unlocked position of the female terminal connector and the male terminal connector.
Fig. 24 is an enlarged schematic view of part I of Fig. 23.
Fig. 25 is an enlarged schematic view of part I of Fig. 24.
Fig. 26 is a cross-sectional view taken along line F-F of Fig. 24.
Fig. 27 is an exploded schematic view of the male terminal connector and the headrest rod sleeve assembly of the present invention.
Fig. 28 is an exploded schematic view of the headrest guide rod assembly and the female terminal connector of the present invention.
Fig. 29 is a schematic structural view of the locking piece of the present invention viewed from one direction.
Fig. 30 is a schematic structural view of the locking piece of the present invention viewed from another direction.
Fig. 31 is the first schematic structural view of the headrest rod sleeve assembly.
Fig. 32 is an enlarged cross-sectional view of part I of Fig. 31.
Fig. 33 is a view taken along direction A of Fig. 31 (including partial cross-section).
Fig. 34 is a view taken along direction B of Fig. 31 (including partial cross-section).
Fig. 35 is a partial structural view of the headrest rod sleeve assembly (including partial cross-section).
Fig. 36 is an enlarged cross-sectional view of part I of Fig. 35.
Fig. 37 is the second schematic structural view of the headrest rod sleeve assembly.
Fig. 38 is an enlarged cross-sectional view of part I of Fig. 37.
Fig. 39 is a view taken along direction A of Fig. 37.
Fig. 40 is the third schematic structural view of the headrest rod sleeve assembly.
Fig. 41 is a schematic view of the headrest rod sleeve assembly snapped on the seat frame wire.
Fig. 42 is a cross-sectional schematic view of the headrest rod sleeve assembly snapped on the seat frame wire.
Fig. 43 is the fourth schematic structural view of the headrest rod sleeve assembly.
Fig. 44 is an enlarged cross-sectional view of part II of Fig. 43.
Fig. 45 is a cross-sectional view taken along line I-I of Fig. 43.
Fig. 46 is the fifth schematic structural view of the headrest rod sleeve assembly.
Fig. 47 is the first cross-sectional view of the headrest rod sleeve assembly.
Fig. 48 is the second cross-sectional view of the headrest rod sleeve assembly.
Fig. 49 is a schematic structural view of the male terminal connector.
Fig. 50 is a view taken along direction A of Fig. 49.
Fig. 51 is the first assembly schematic view of the male terminal connector body and the male terminal conductive rod.
Fig. 52 is the second assembly schematic view of the male terminal connector body and the male terminal conductive rod.
Fig. 53 is an enlarged cross-sectional view of part I of Fig. 52.
Fig. 54 is the third assembly schematic view of the male terminal connector body and the male terminal conductive rod.
Fig. 55 is the fourth assembly schematic view of the male terminal connector body and the male terminal conductive rod.
Fig. 56 is the fifth assembly schematic view of the male terminal connector body and the male terminal conductive rod.
Fig. 57 is an enlarged view of part I of Fig. 56.
Fig. 58 is the sixth assembly schematic view of the male terminal connector body and the male terminal conductive rod.
Fig. 59 is a cross-sectional view taken along line J-J of Fig. 58.
Fig. 60 is a schematic structural view of the torsion spring.
Fig. 61 is the first schematic structural view of the clamp spring.
Fig. 62 is the second schematic structural view of the clamp spring.
Fig. 63 is the third schematic structural view of the clamp spring.
Fig. 64 is the first assembly schematic view between the clamp spring and the torsion spring.
Fig. 65 is the second assembly schematic view between the clamp spring and the torsion spring.
Fig. 66 is the third assembly schematic view between the clamp spring and the torsion spring.
Fig. 67 is the fourth assembly schematic view between the clamp spring and the torsion spring.
Fig. 67a is a schematic structural view of a clamp spring assembly of the present invention viewed from one direction.
Fig. 67b is a schematic structural view of a clamp spring assembly of the present invention viewed from another direction.
Fig. 67c is an assembly schematic view of a clamp spring assembly and a male terminal connector of the present invention.
Fig. 67d is the first assembly cross-sectional view of a clamp spring assembly and a male terminal connector of the present invention.
Fig. 67e is a schematic structural view of a male terminal connector of the present invention.
Fig. 67f is the second assembly cross-sectional view of a clamp spring assembly and a male terminal connector of the present invention.
Fig. 67g is the third assembly cross-sectional view of a clamp spring assembly and a male terminal connector of the present invention.
Fig. 68 is a schematic structural view of the male terminal viewed from one direction.
Fig. 69 is a schematic structural view of the male terminal viewed from another direction.
Fig. 70 is a schematic structural view of the clamp spring and the torsion spring installed on the male terminal connector body.
Fig. 71 is a cross-sectional view of the clamp spring and the torsion spring installed on the male terminal connector body.
Fig. 72 is the first schematic structural view of the male terminal installed on the male terminal connector body.
Fig. 73 is the second schematic structural view of the male terminal installed on the male terminal connector body.
Fig. 74 is a cross-sectional view of the male terminal installed on the male terminal connector body.
Fig. 75 is an enlarged schematic view of part I of Fig. 74.
Fig. 76 is the first schematic view of the male terminal connector inserted into the headrest rod sleeve assembly.
Fig. 77 is the second schematic view of the male terminal connector inserted into the headrest rod sleeve assembly.
Fig. 78 is a cross-sectional view taken along line M-M of Fig. 77.
Fig. 79 is a cross-sectional view taken along line N-N of Fig. 77.
Fig. 80 is the third schematic view of the male terminal connector inserted into the headrest rod sleeve assembly.
Fig. 81 is a cross-sectional view taken along line O-O of Fig. 80.
Fig. 82 is a cross-sectional view taken along line P-P of Fig. 80.
Fig. 83 is the fourth schematic view of the male terminal connector inserted into the headrest rod sleeve assembly.
Fig. 84 is a cross-sectional view taken along line Q-Q of Fig. 83.
Fig. 85 is a cross-sectional view taken along line R-R of Fig. 83.
Fig. 86 is the fifth schematic view of the male terminal connector inserted into the headrest rod sleeve assembly.
Fig. 87 is a cross-sectional view taken along line S-S of Fig. 86.
Fig. 88 is a schematic view of the female terminal connector inserted into the headrest rod.
Fig. 89 is a cross-sectional view taken along line T-T of Fig. 88.
Fig. 90 is a cross-sectional view taken along line U-U of Fig. 88.
Fig. 91 is a partial view of the headrest rod.
Fig. 92 is the first external schematic view of the female terminal connector.
Fig. 93 is the second external schematic view of the female terminal connector.
Fig. 94 is the first schematic structural view of the female terminal connector body.
Fig. 95 is a cross-sectional view taken along line V-V of Fig. 94.
Fig. 96 is a cross-sectional view taken along line W-W of Fig. 94.
Fig. 97 is the second schematic structural view of the female terminal connector body.
Fig. 98 is a schematic structural view of the female terminal viewed from one direction.
Fig. 99 is a schematic structural view of the female terminal viewed from another direction.
Fig. 99a is a schematic structural view of another male terminal.
Fig. 99b is a schematic structural view of another male terminal connector.
Fig. 99c is an assembly schematic view between another male terminal and another male terminal connector.
Fig. 100 is a schematic structural view of the female terminal connector.
Fig. 101 is a longitudinal cross-sectional view of the female terminal connector.
Fig. 101a is a schematic structural view of another female terminal.
Fig. 101b is an external schematic view of the female terminal connector.
Fig. 101c is an assembly schematic view between another female terminal and the female terminal connector.
Fig. 102 is a transverse cross-sectional view of the female terminal connector.
Fig. 103 is the first schematic view of the headrest inserted into the seat.
Fig. 104 is the first schematic view of the male terminal connector and the female terminal connector being locked.
Fig. 105 is a cross-sectional view taken along line X-X of Fig. 104.
Fig. 106 is the second schematic view of the male terminal connector and the female terminal connector being locked.
Fig. 107 is the second schematic view of the headrest inserted into the seat.
Fig. 108 is one of the schematic views of the male terminal connector squeezing the locking piece.
Fig. 109 is a cross-sectional view taken along line Y-Y of Fig. 108.
Fig. 110 is a cross-sectional view taken along line Z-Z of Fig. 108.
Fig. 111 is the third schematic view of the headrest inserted into the seat.
Fig. 112 is one of the schematic views of the male terminal connector squeezing the locking piece and the locking piece deforming.
Fig. 113 is a cross-sectional view taken along line A1-A1 of Fig. 112.
Fig. 114 is a cross-sectional view taken along line B1-B1 of Fig. 112.
Fig. 115 is a schematic view of the headrest rod moving up and down relative to the headrest rod sleeve assembly.
Fig. 116 is the first schematic view of the headrest being pulled out from the seat.
Fig. 117 is a schematic view of the headrest rod sleeve assembly squeezing the clamp spring.
Fig. 118 is a cross-sectional view taken along line C1-C1 of Fig. 117.
Fig. 119 is the second schematic view of the headrest being pulled out from the seat.
Fig. 120 is a schematic view of the clamp spring being locked and connected to the female terminal connector.
Fig. 121 is a cross-sectional view taken along line C1-C1 of Fig. 120.
Fig. 122 is a schematic view of the headrest being completely pulled out from the seat.
Fig. 123 is a schematic view of the state between the male terminal connector and the headrest rod sleeve assembly after the headrest is completely pulled out from the seat.
Fig. 124 is a cross-sectional view taken along line E1-E1 of Fig. 123.
Fig. 125 is one of the schematic structural views of another headrest rod sleeve assembly.
Fig. 126 is the first schematic structural views of another male terminal connector.
Fig. 127 is the second schematic structural view of another male terminal connector.
Fig. 128 is a schematic structural view of another male terminal.
Fig. 129 is an external schematic view of the assembly of another headrest rod sleeve assembly and another male terminal connector.
Fig. 130 is a view taken along direction A of Fig. 129.
Fig. 131 is a cross-sectional view taken along line G1-G1 of Fig. 130.
Fig. 132 is a schematic view of another male terminal connector inserted into another female terminal connector.
Fig. 133 is a cross-sectional view of the headrest rod at the lower limit position.
Fig. 134 is a cross-sectional view of the headrest rod at the upper limit position.
Fig. 135 is a schematic perspective view of the fixed connection structure of the headrest guide sleeve, the frame bracket and the sleeve member.
Fig. 136 is a cross-sectional view taken along line A-A of Fig. 135.
Fig. 137 is a schematic perspective view of the headrest guide sleeve.
Fig. 138 is a cross-sectional view of the headrest guide sleeve.
Fig. 139 is a schematic perspective view of the frame bracket.
Fig. 140 is a schematic perspective view of the sleeve member viewed from one direction.
Fig. 141 is a schematic perspective view of the sleeve member viewed from another direction.
Fig. 142 is a cross-sectional view of the sleeve member.

### Detailed Description of Drawings

The present invention will be further described below with reference to the accompanying drawings and specific embodiments.

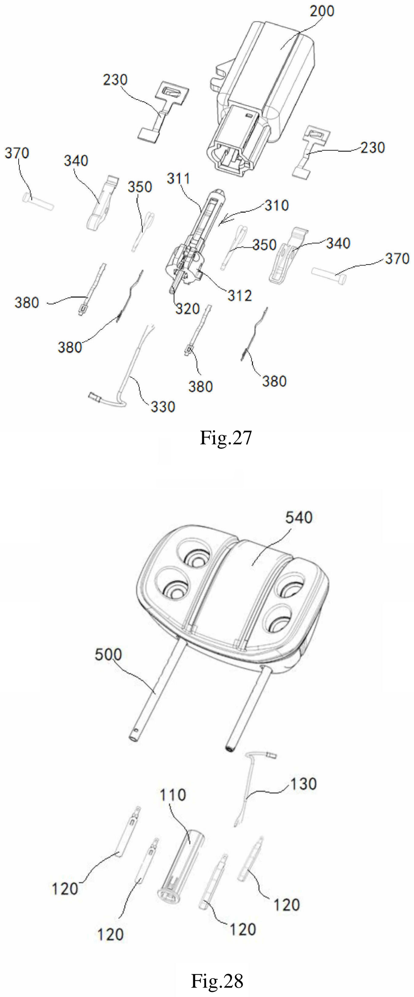

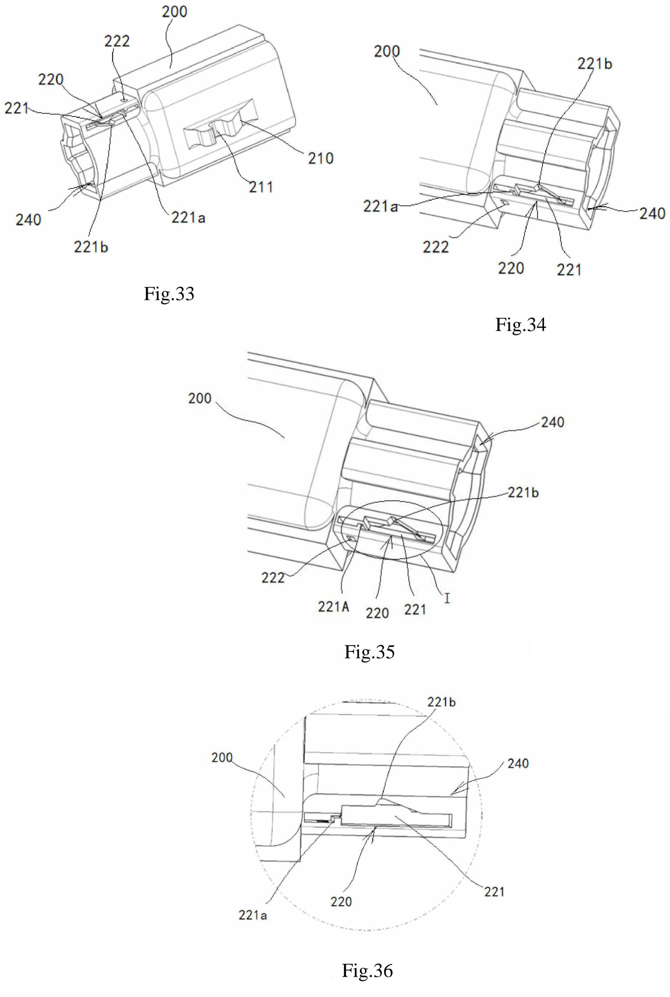

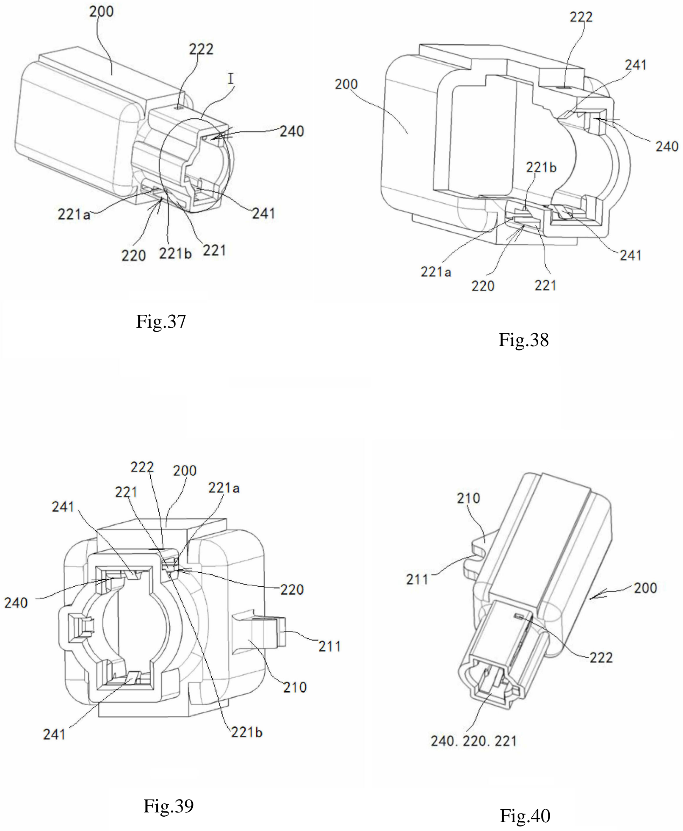

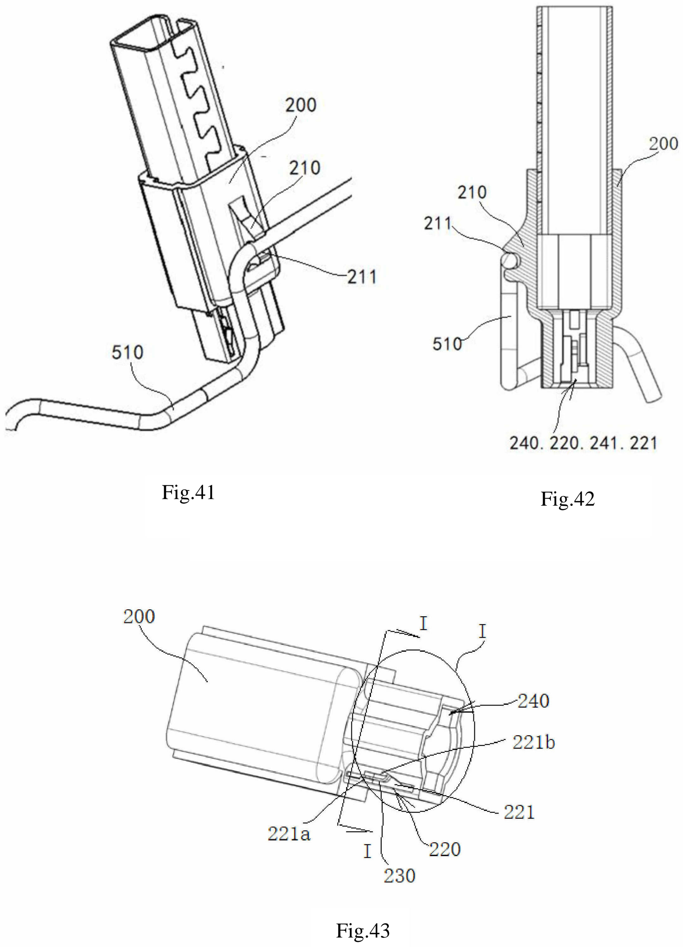

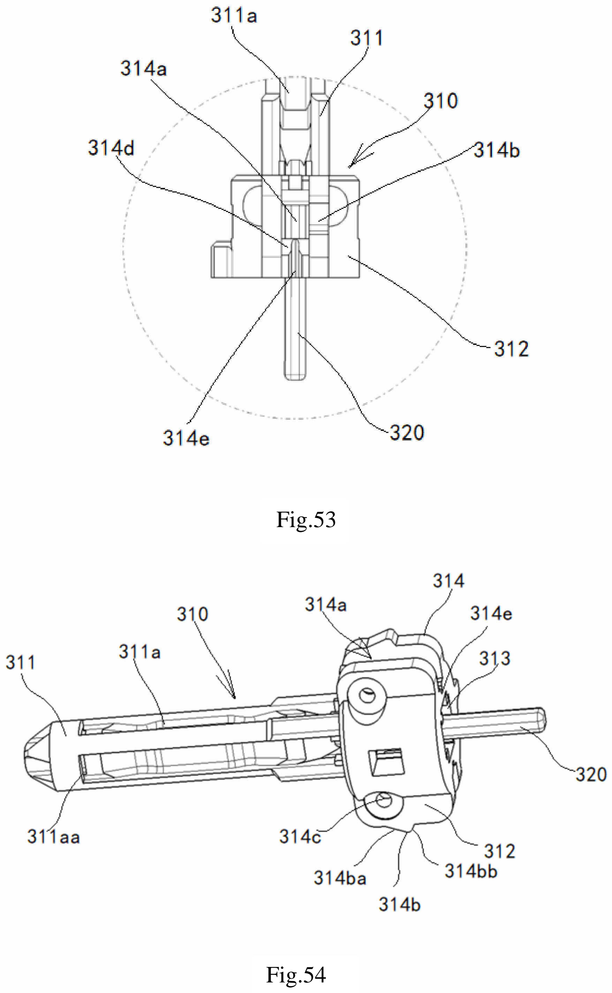

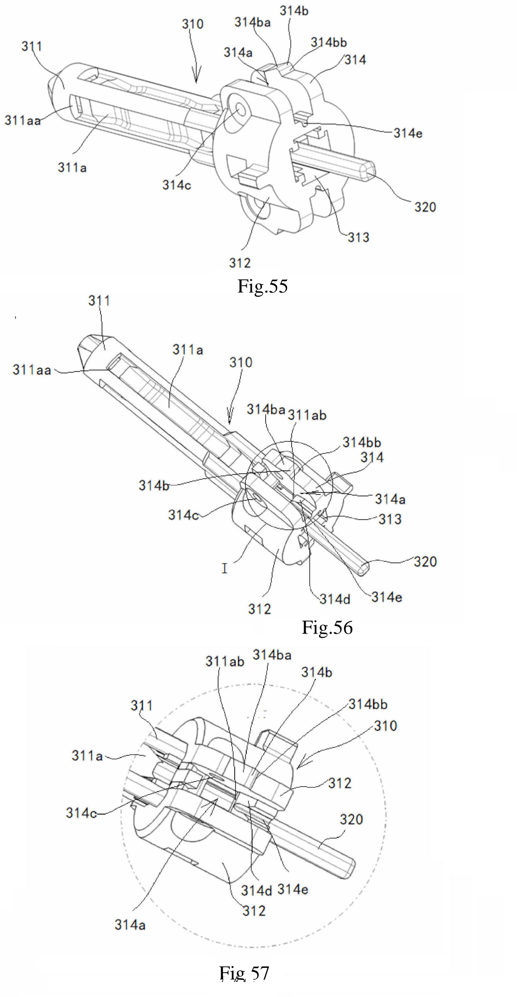

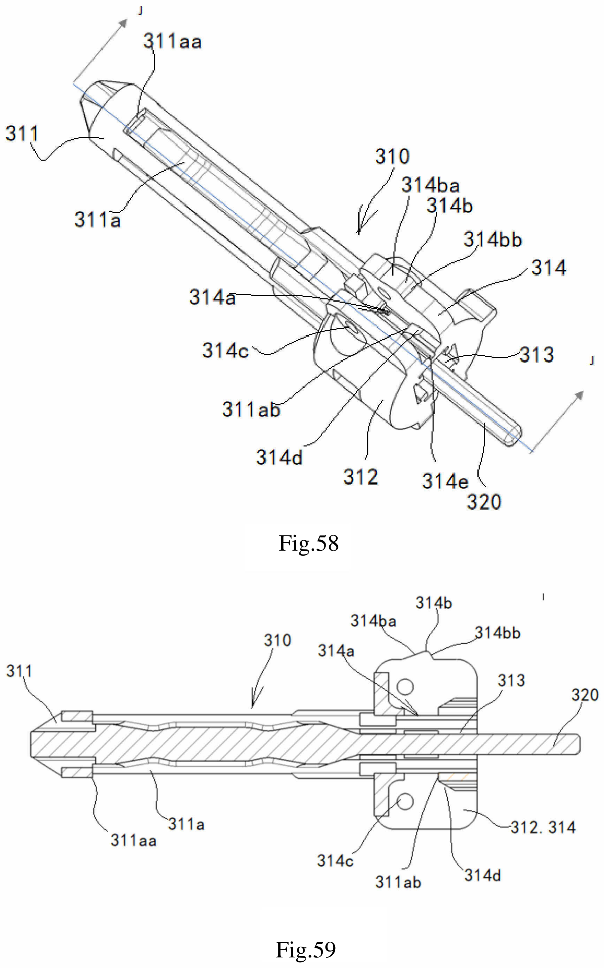

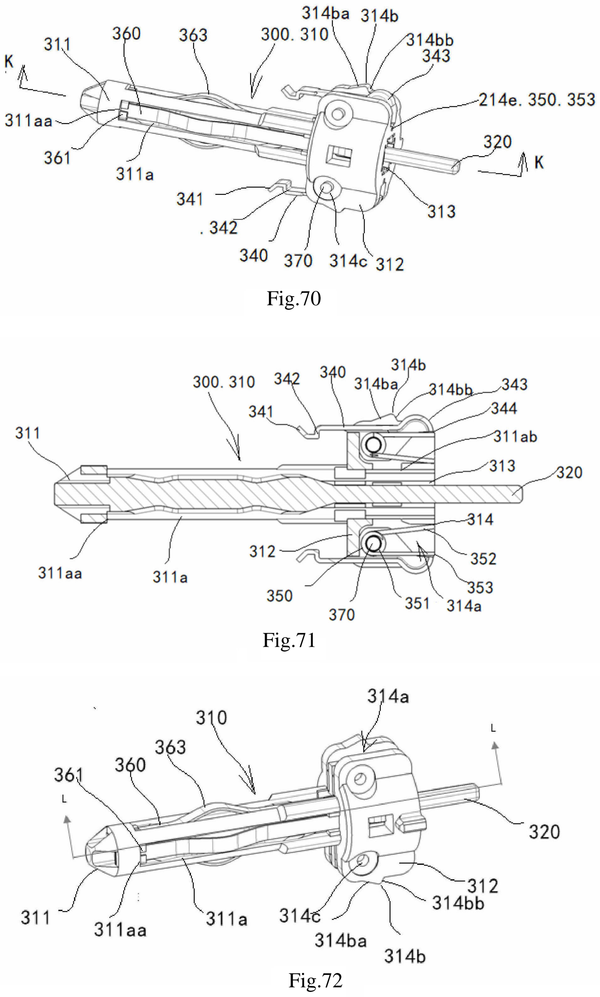

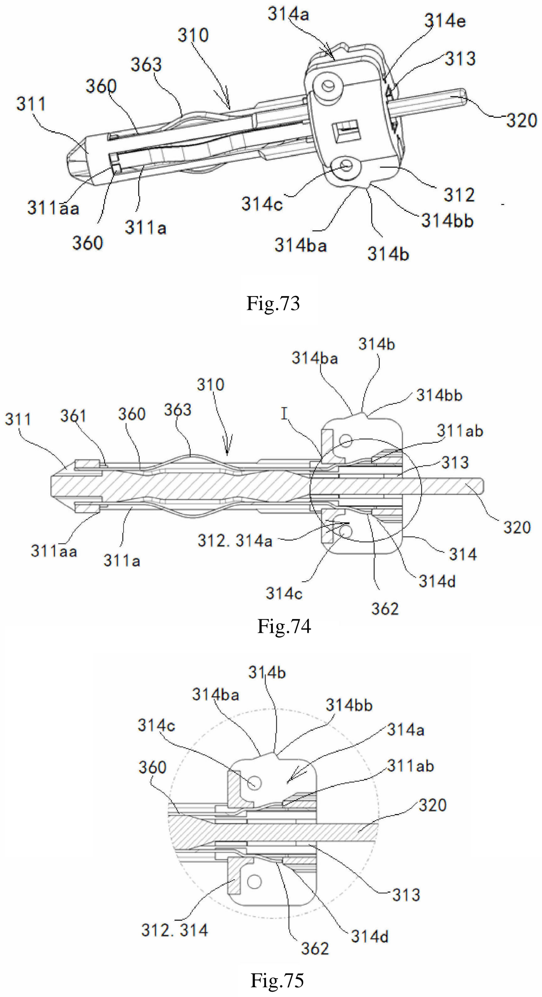

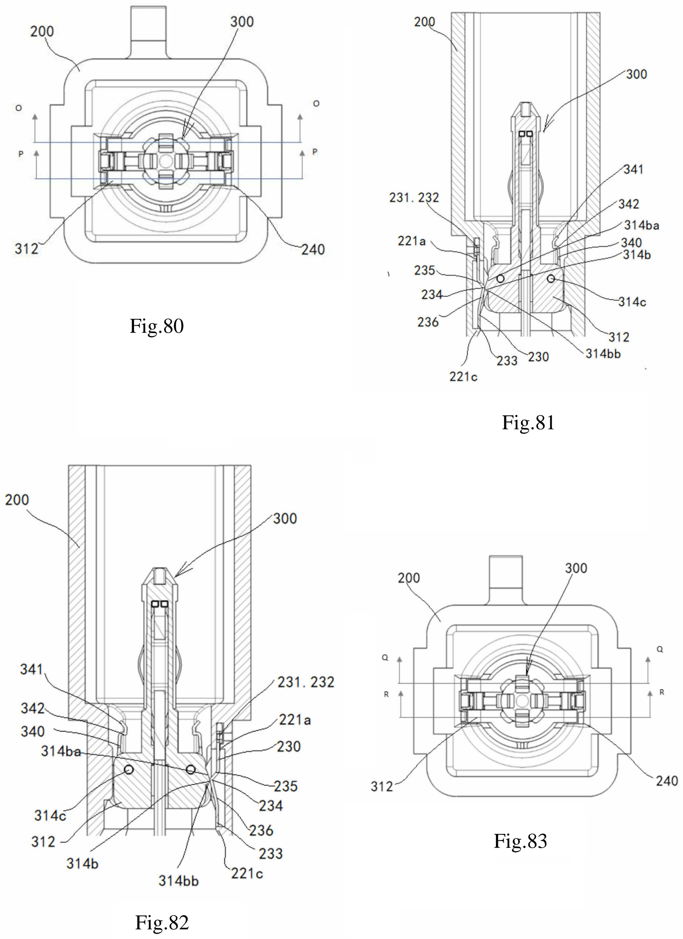

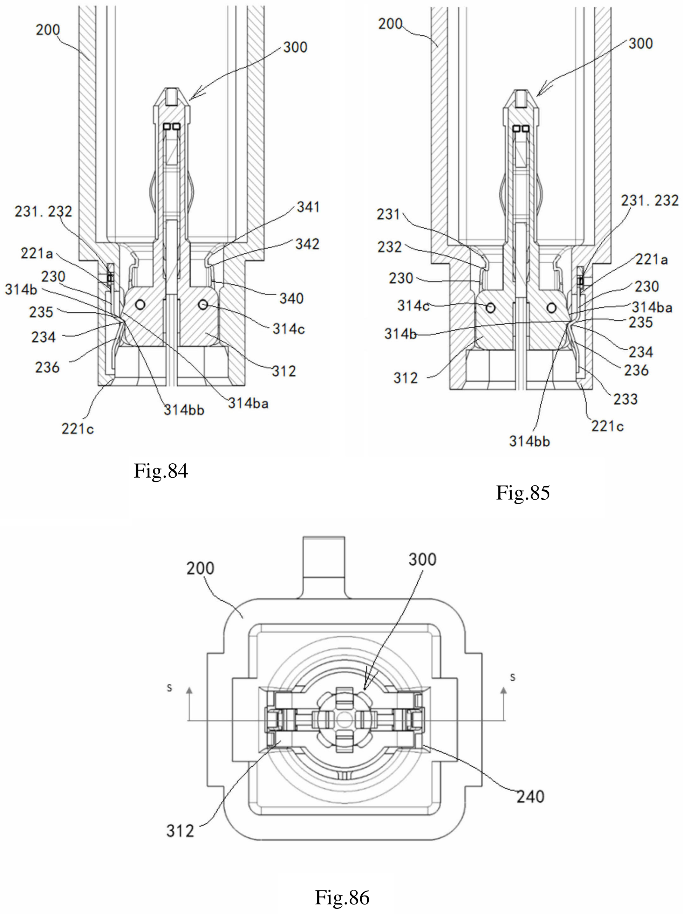

Referring to Figs. 27, 29 to 87, the pluggable connector device with an automatic unlocking and locking mechanism shown in the figures mainly includes a male terminal connector assembly and a female terminal connector 100.

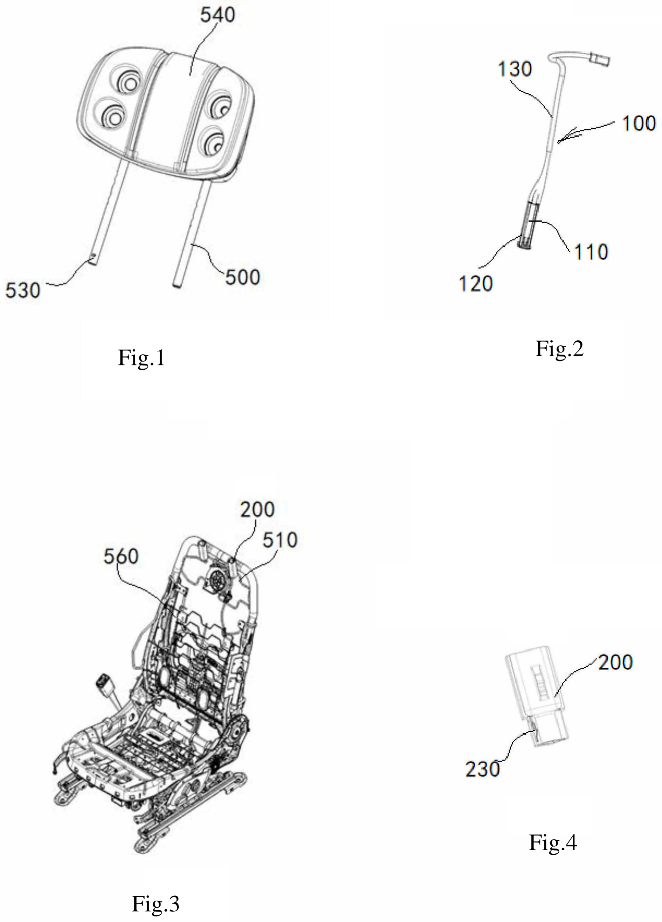

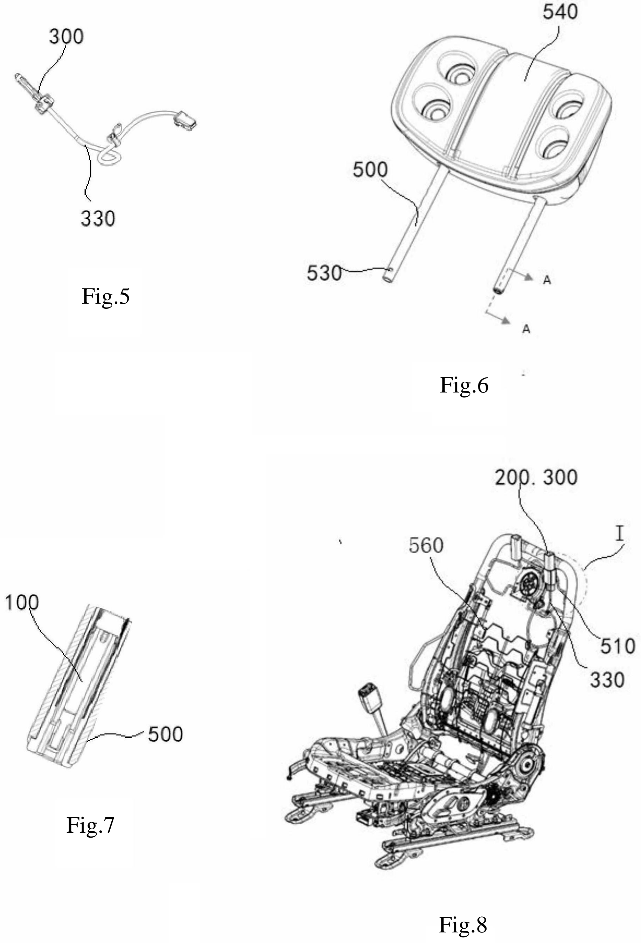

The male terminal connector assembly includes a headrest rod sleeve assembly 200 (see also Fig. 4), a male terminal connector 300, and a male terminal connector wire harness 330 electrically connected to the male terminal connector 300 (see also Fig. 5).

Referring specifically to Figs. 3, 40 to 42, a snapping structure 210 is provided on the outer periphery of the headrest rod sleeve assembly 200, and an arc-shaped snap opening 211 is provided on the snapping structure 210. During installation, the arc-shaped snap opening is snapped on the steel wire 510 in the seat back frame 560, and the headrest rod sleeve assembly 200 can be fixed on the seat back.

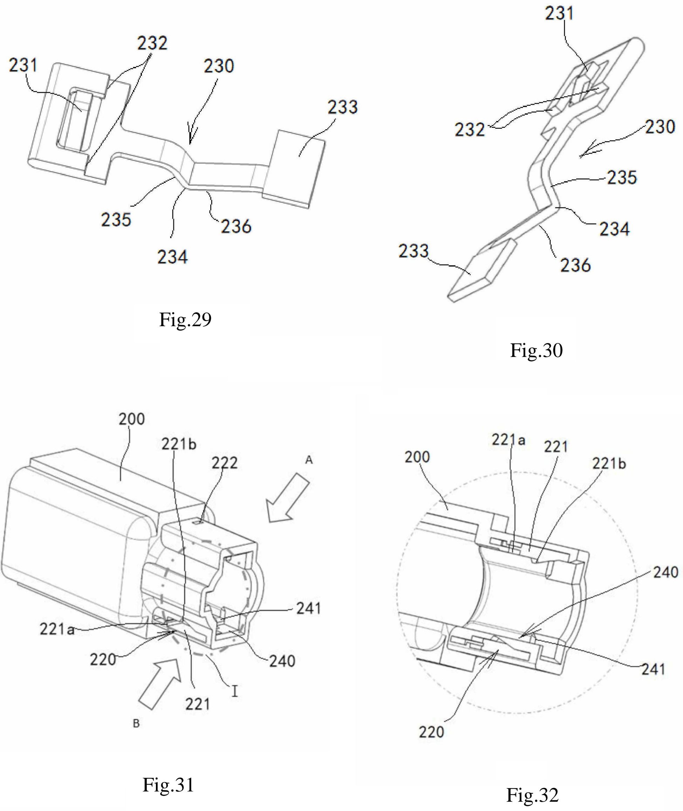

Referring specifically to Figs. 31 to 39 and 43 to 46, two guide grooves 240 are circumferentially provided on the headrest rod sleeve assembly 200. A locking piece mounting portion 220 is provided in each guide groove 240. Each locking piece mounting portion 220 includes a locking piece mounting groove 221 and a snap opening 222, and the snap opening 222 communicates with the first end of the locking piece mounting groove 221. A limiting rib 221a is provided at the first end of the locking piece mounting groove 221, and a limiting groove 221b is provided in the locking piece mounting groove 221. In addition, an inclined edge portion 241 is provided in each guide groove 240.

Referring specifically to Figs. 29 to 30, an elastic fixing portion 231 and a limiting portion 232 are provided at the first end of the locking piece 230. The second end of the locking piece 230 is a free end, and a moving portion 233 is provided. An outwardly protruding elastic snap protrusion 234 is provided at the middle position of the locking piece 230. An upper inclined surface 235 (the aforementioned first upper inclined surface) and a lower inclined surface 236 (the aforementioned first lower inclined surface) are respectively provided on the upper and lower sides of the elastic snap protrusion 234.

There are two locking pieces 230, which are respectively installed in the two locking piece mounting grooves 221. The elastic fixing portion 231 on the locking piece 230 is snapped into the snap opening 222 to prevent the locking piece 230 from falling out of the locking piece mounting groove 221. After the locking piece 230 is installed in the locking piece mounting groove 221, the limiting rib 221a contacts the limiting portion 232 to limit the movement of the locking piece 230 in its length direction.

The limiting groove 221b is adapted to the shape of the elastic snap protrusion 234, and the elastic snap protrusion 234 is limited to move in the limiting groove 221b so as to prevent the elastic snap protrusion 234 from popping out excessively.

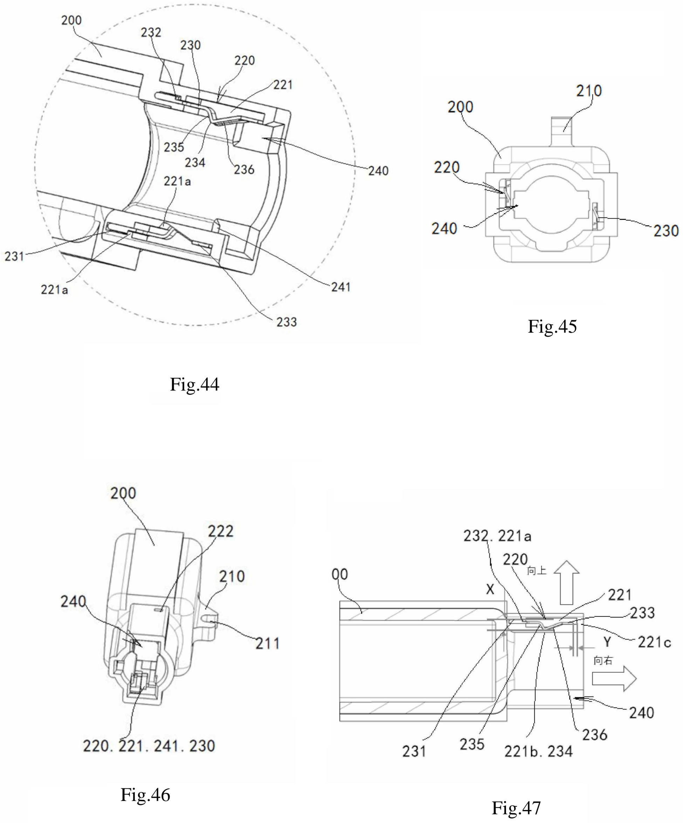

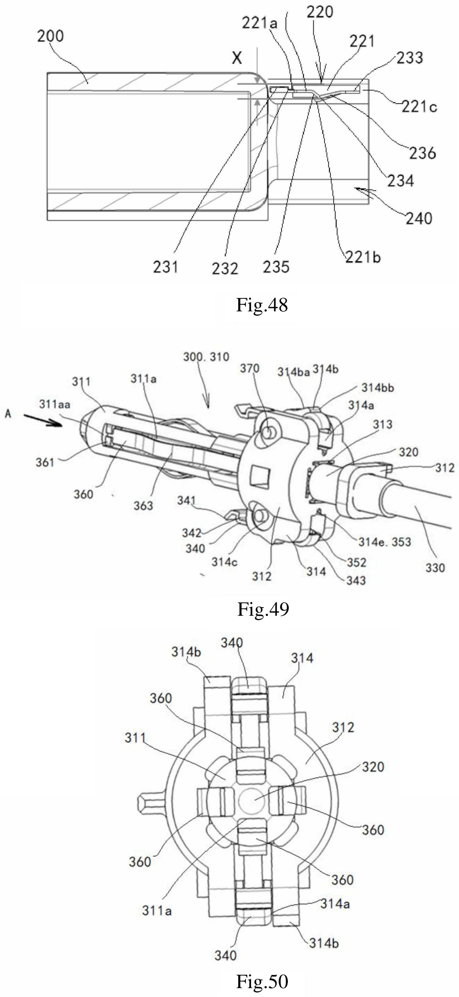

Referring to Figs. 47 and 48, a gap Y is reserved between the moving portion 233 of the locking piece 230 and the second end 221c of the locking piece mounting groove 221. When the elastic snap protrusion 234 of the locking piece 230 is squeezed by an external force, the locking piece 230 undergoes compressive deformation, moving and distorting upward and to the right, with the X-direction distance decreasing. Meanwhile, the moving portion 233 of the locking piece 230 moves to the right, and the gap Y decreases.

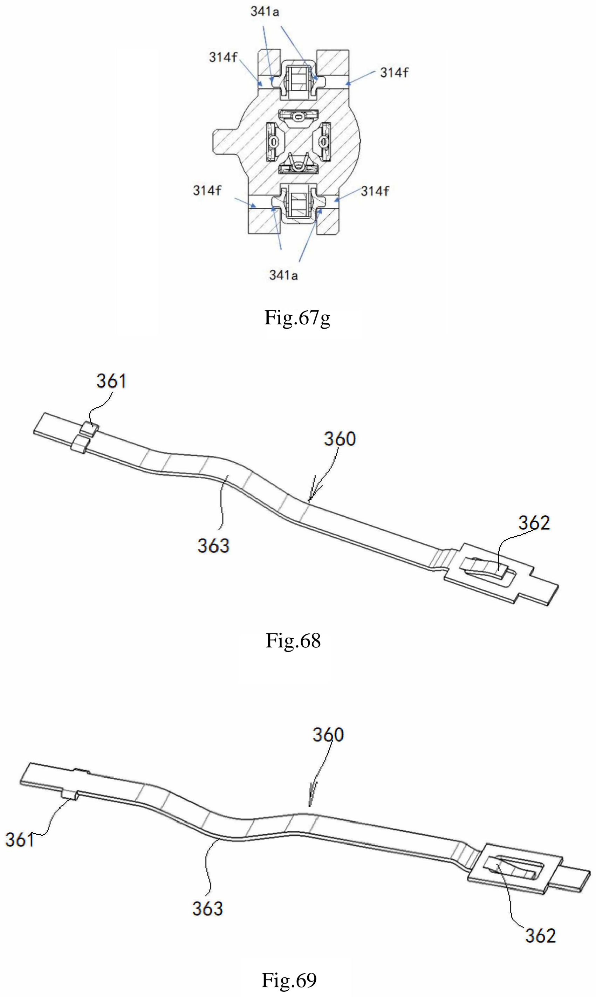

Referring specifically to Figs. 49 to 59, the male terminal connector 300 includes a male terminal connector body 310 having a male terminal mounting portion 311 and a wire harness connecting portion 312. The male terminal mounting portion 311 is configured to mount the male terminal 360 shown in Figs. 68 and 69. A conductive rod mounting hole 313 is provided in the male terminal mounting portion 311 and the wire harness connecting portion 312, and a male terminal conductive rod 320 is inserted into the conductive rod mounting hole 313. The male terminal conductive rod 320 is made of a conductive material, such as copper, thereby providing it with excellent electrical conductivity.

The male terminal connector wire harness 330 is inserted into the male terminal conductive rod 320 and tightened or clamped by a cable tie 331 or a clamp. The male terminal connector wire harness 330 is electrically connected to the section of the male terminal conductive rod 320 inserted into the wire harness connecting portion 312.

A pair of guide structures 314 are provided on the outer periphery of the wire harness connecting portion 312. The guide structures 314 move in the guide grooves 240 in the headrest rod sleeve assembly 200, preferably under guidance.

In at least one, for example, each guide structure 314, a spring mounting groove 314a is provided, and a fixing snap protrusion 314b is provided on each guide structure 314. An upper inclined surface 314ba (the aforementioned second upper inclined surface) and a lower inclined surface 314bb (the aforementioned second lower inclined surface) are respectively provided on the upper and lower sides of the fixing snap protrusion 314b. A pair of coaxial shaft holes 314c are also provided on the guide structure 314. An inclined edge portion 314d is provided in the spring mounting groove 314a, and a groove 314e is provided at the bottom of the spring mounting groove 314a. Each guide structure 314 includes two walls, and the fixing snap portion is provided on one of the walls, preferably on the upper side of the wall.

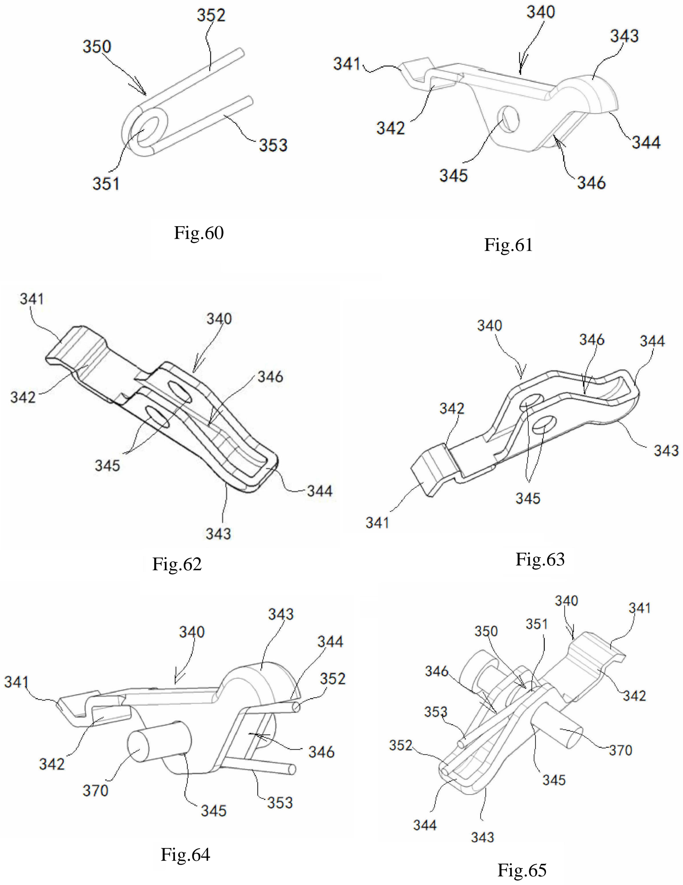

In an embodiment regarding the torsion spring and the clamp spring, referring specifically to Fig. 60, the torsion spring 350 has a spring cylindrical pin through hole 351 and a pair of elastic edges 352, 353.

Referring specifically to Figs. 61 to 63, the clamp spring 340 (viewed in the transverse direction) has a U-shaped structure with a U-shaped groove 346. An introduction portion 341 and a locking portion 342 are provided at one end of the clamp spring 340. When viewed in the vertical direction in the installed state, the introduction portion is located above the locking portion. An unlocking driving portion 343 and a supporting edge 344 are provided at the other end of the clamp spring 340. The introduction portion 341 has an inclined edge structure. The unlocking driving portion 343 has an arc structure. The locking portion 342 has a step structure. A pair of coaxial clamp spring cylindrical pin through holes 345 are provided at the middle position of the clamp spring 340.

Referring specifically to Figs. 49, 64 to 67, 70 and 71, a clamp spring 340 and a torsion spring 350 are hinged in the spring mounting groove 314a. The torsion spring 350 is installed in the U-shaped groove 346 of the clamp spring 340. By passing a cylindrical pin 370 through the pair of shaft holes 314c of the guide structure 314, the pair of clamp spring cylindrical pin through holes 345 of the clamp spring 340, and the spring cylindrical pin through hole 351 of the torsion spring 350, the clamp spring 340 and the torsion spring 350 can be installed in the spring mounting groove 314a, wherein the elastic edge 352 of the torsion spring 350 contacts the supporting edge 344 on the clamp spring 340, and the elastic edge 352 of the torsion spring 350 is snapped into the groove 314e.

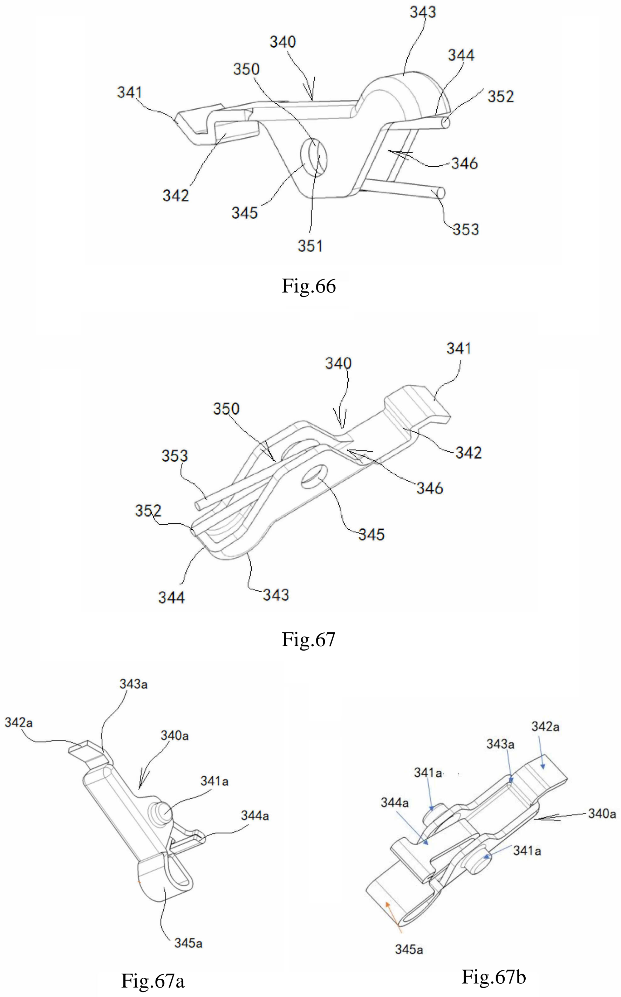

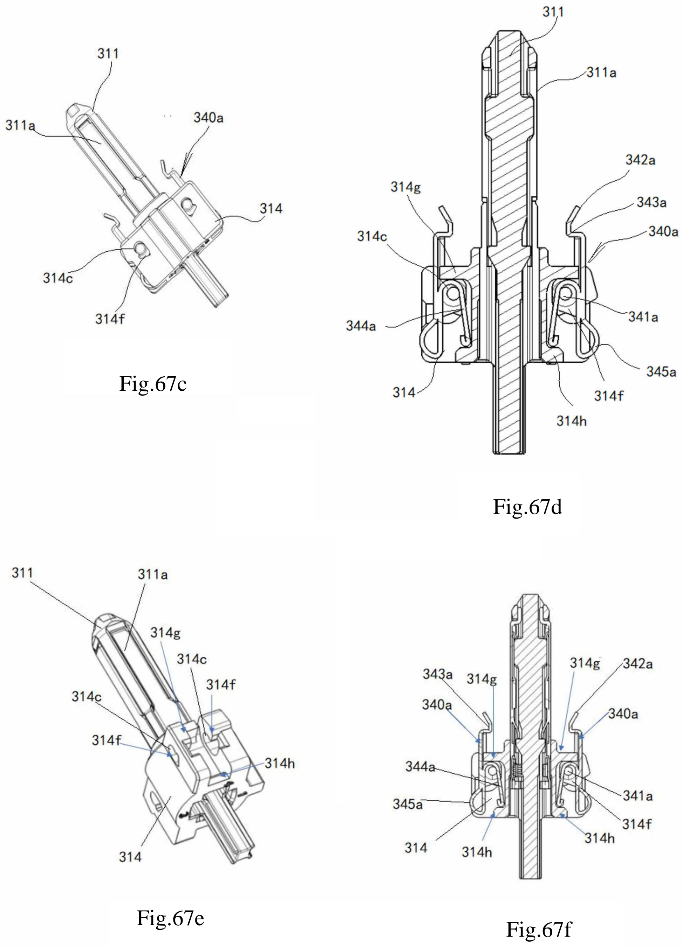

In another embodiment regarding the torsion spring and the clamp spring, referring to Figs. 67a to 67g, the clamp spring and the torsion spring are integrated into one piece, forming a clamp spring assembly 340a. A pair of rotation positioning portions 341a are directly formed at the middle position of the clamp spring assembly 340a, and the clamp spring assembly 340a is installed into the spring mounting groove 314a through the pair of rotation positioning portions 341a. An introduction portion 342a and a snapping portion 343a are directly formed at one end of the clamp spring assembly 340a, and an elastic portion 344a is formed between the pair of rotation positioning portions 341a. After the clamp spring assembly 340a is installed, the pair of rotation positioning portions 341a are snapped into the pair of shaft holes 314c of the guide structure 314, and the elastic portion 344a acts on the bottom edge of the spring mounting groove 314a. A supporting portion 345a is formed at the other end of the clamp spring assembly 340a. When the supporting portion 345a touches the inclined edge portion 241 in the headrest rod sleeve assembly 200, the inclined edge portion 241 drives the clamp spring assembly 340a to rotate around the pair of rotation positioning portions 341a, preferably around the central axis of the pair of rotation positioning portions 341a, through the supporting portion 345a, so that the snapping portion 343a exits from the locking hole 115 on the female terminal connector body 110, thereby separating the male terminal connector 300 from the female terminal connector 100. At this time, the elastic portion 344a is compressed and stores energy through deformation. When the supporting portion 345a does not touch the inclined edge portion 241 in the headrest rod sleeve assembly 200, relying on the restoring force of the elastic portion 344a, the clamp spring assembly 340a is driven to rotate around the pair of rotation positioning portions 341a, preferably around the central axis of the pair of rotation positioning portions 341a, so that the snapping portion 343a is snapped into the locking hole 115 on the female terminal connector body 110, thereby snapping the male terminal connector 300 and the female terminal connector 100 together.

To smoothly snap the pair of rotation positioning portions 341a into the pair of shaft holes 314c of the guide structure 314, a snapping groove 314f is provided at a position of the guide structure 314 adjacent to the pair of shaft holes 314c, and the snapping groove 314f communicates with the shaft holes 314c. During installation, the pair of rotation positioning portions 341a are first snapped into the snapping groove 314f, and then snapped into the pair of shaft holes 314c through the snapping groove 314f.

To limit the clamp spring assembly 340a, an upper limiting structure 314g and a lower limiting structure 314h are provided in the spring mounting groove 314a. The upper limiting structure 314g is used to limit the flipping angle of the clamp spring assembly 340a during placement to prevent the clamp spring assembly 340a from rotating counterclockwise by an excessive angle. The lower limiting structure 314h prevents the clamp spring assembly 340a from rotating clockwise by an excessive angle. This avoids the inability to insert the female terminal connector 100 and the male terminal mounting portion 311 due to the excessively small angle and size of the clamp spring assembly 340a in the counterclockwise and clockwise directions.

Referring specifically to Figs. 68 and 69, four male terminals 360 are provided for each male terminal mounting portion 311. A snapping edge 361 is provided at one end of each male terminal 360, and an elastic snap portion 362 is provided at the other end. An elastic conductive contact portion 363 is provided at the middle position of each male terminal 360.

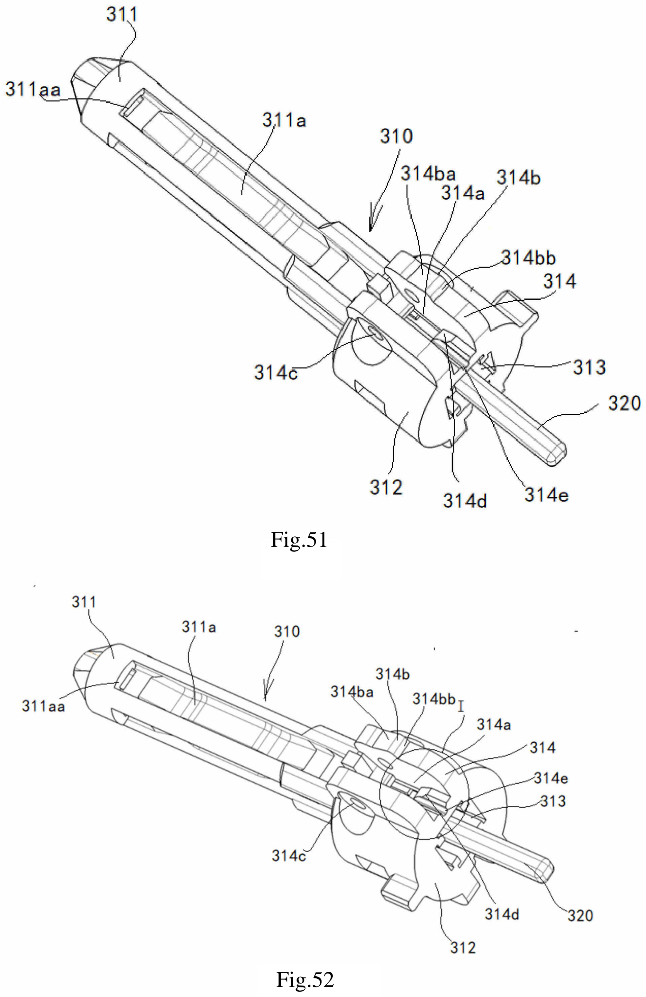

Referring specifically to Figs. 51 to 59 and 70 to 75, four male terminal mounting grooves 311a are uniformly provided circumferentially on the male terminal mounting portion 311. Each male terminal mounting groove 311 a is radially communicated with the conductive rod mounting hole 313 and communicated with the outside of the male terminal mounting portion 311. The male terminal mounting groove 311 a extends along the axial direction of the conductive rod mounting hole 313, and one end of the male terminal mounting groove 311 a extends into the wire harness connecting portion 312. Corresponding male terminal limiting portions 311aa, 311ab are respectively provided at both ends of the male terminal mounting groove 311 a.

The four male terminals 360 are made of a conductive material, such as copper. The male terminals are respectively installed in the four male terminal mounting grooves 311a and are in electrical contact with the section of the male terminal conductive rod 320 inserted into the male terminal mounting portion 311. The snapping edge 361 and the elastic snap portion 362 at both ends of the male terminal 360 respectively contact the male terminal limiting portions 311aa, 311ab at both ends of the male terminal mounting groove 311a, thereby axially limiting the male terminal 360 in the male terminal mounting groove 311a.

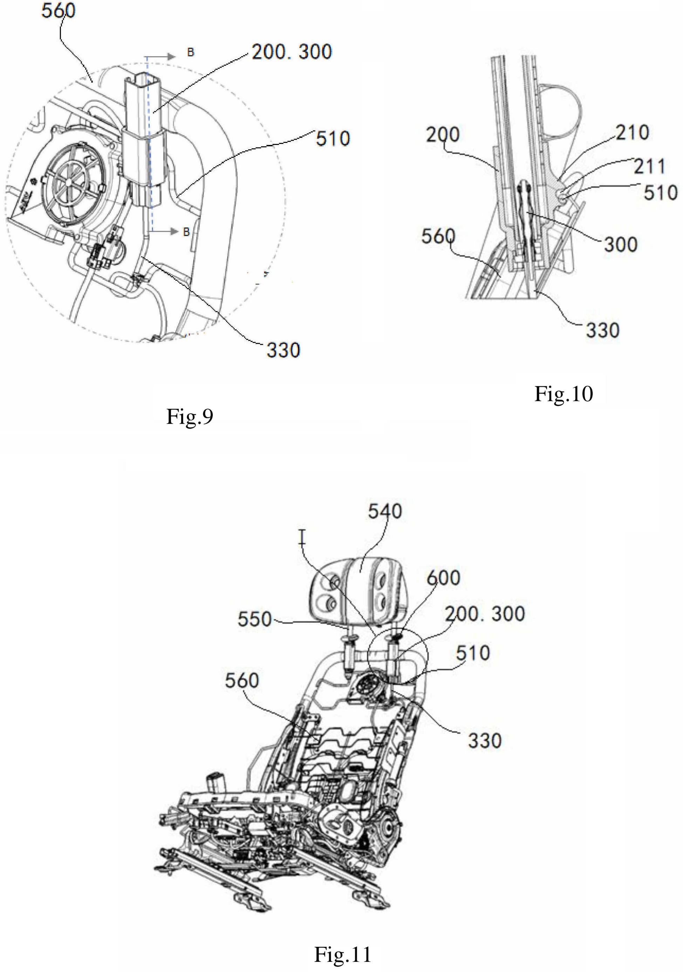

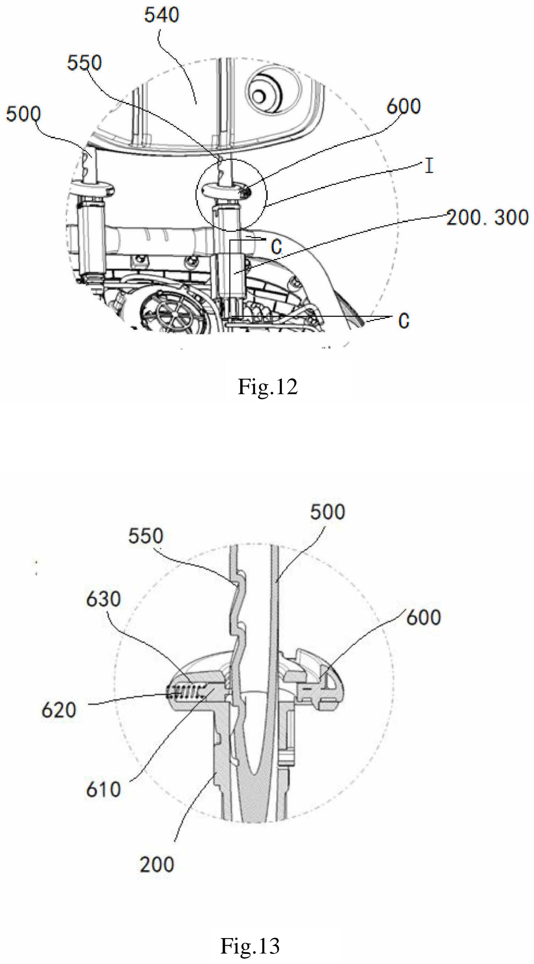

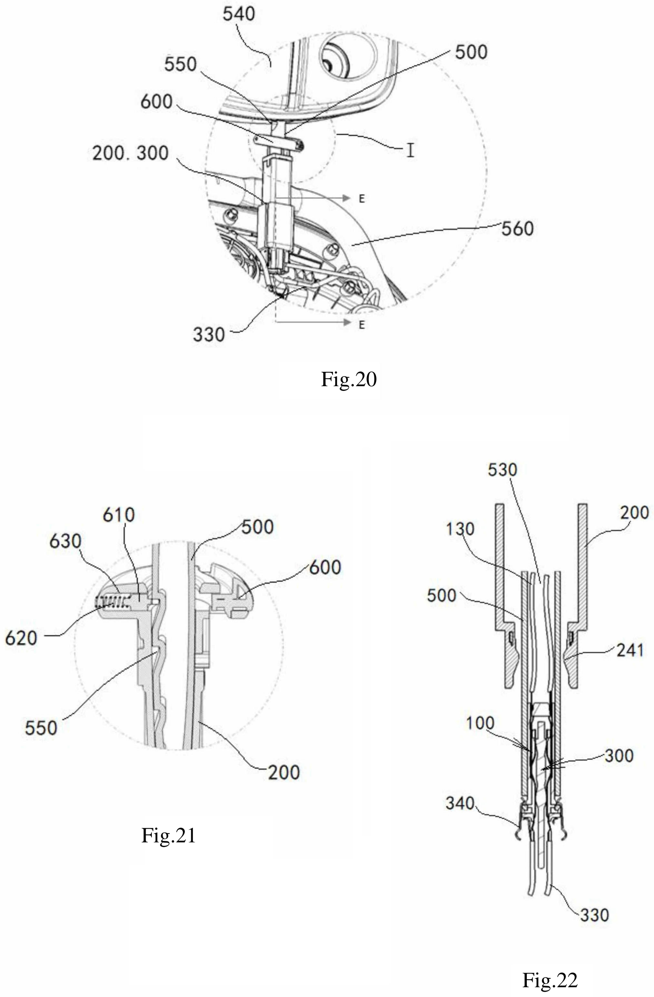

Referring specifically to Figs. 11 to 26, a headrest rod locking component 600 is fixedly installed on the headrest rod sleeve assembly 200. A locking pin mounting hole 630 is provided in the headrest rod locking component 600. A locking pin 610 and a locking pin return spring 620 are press-fitted in the locking pin mounting hole 630. One end of the locking pin return spring 620 acts on the locking pin 610, and the other end acts on the headrest rod locking component 600.

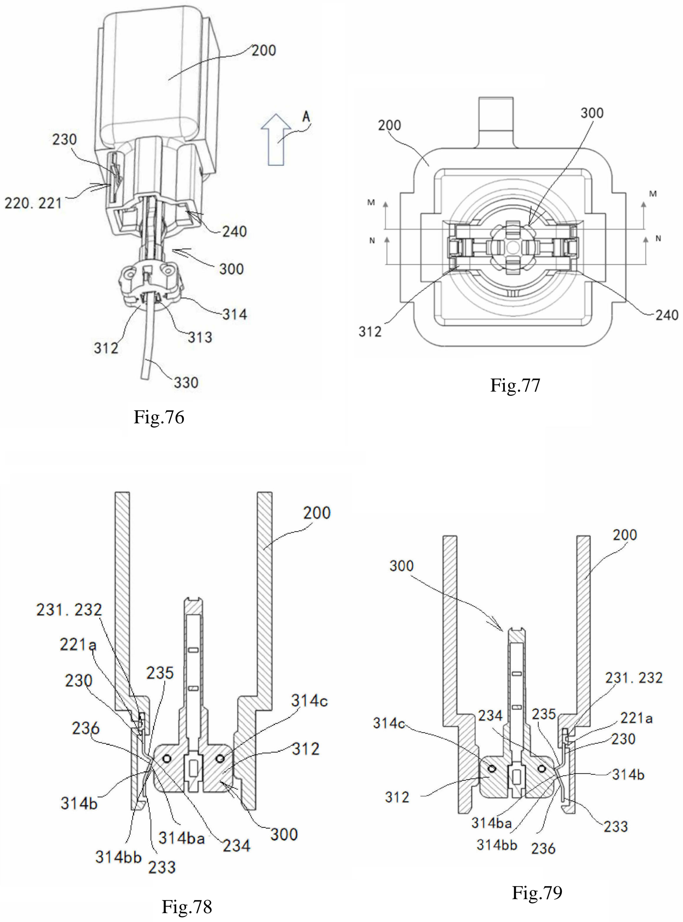

Referring to Fig. 76, insert the male terminal connector 300 into the headrest rod sleeve assembly 200 in the direction indicated by arrow A in Fig. 76.

Referring to Figs. 77 to 87, during the process of inserting the male terminal connector 300 into the headrest rod sleeve assembly 200 in the direction indicated by arrow A in Fig. 76, after the pair of guide structures 314 of the wire harness connecting portion 312 are inserted into the two guide grooves 240 on the headrest rod sleeve assembly 200, the upper inclined surface 314ba of the fixing snap protrusion 314b touches the lower inclined surface 236 of the elastic snap protrusion 234 of the locking piece 230. The upper inclined surface 314ba of the fixing snap protrusion 314b forces the locking piece 230 to expand outward through the lower inclined surface 236 of the elastic snap protrusion 234 of the locking piece 230, so that the fixing snap protrusion 314b passes over the elastic snap protrusion 234. After the fixing snap protrusion 314b passes over the elastic snap protrusion 234, the locking piece 230 resets under the action of the restoring force, so that the upper inclined surface 235 of the elastic snap protrusion 234 contacts the lower inclined surface 314bb of the fixing snap protrusion 314b, thereby limiting the male terminal connector 300 from falling. At the same time, under the action of the torsion spring 350, the unlocking driving portion 343 at the lower end of the clamp spring 340 contacts the inclined edge portion 241 in the headrest rod sleeve assembly 200, thereby limiting the male terminal connector 300 from shifting upward or moving upward. Through the cooperation between the fixing snap protrusion 314b and the elastic snap protrusion 234, and the cooperation between the unlocking driving portion 343 at the lower end of the clamp spring 340 and the inclined edge portion 241 in the headrest rod sleeve assembly 200, the male terminal connector 300 is limited at the pre-installed position (see also Figs. 8 to 10).

Referring to Figs. 28, 88 to 101, the female terminal connector 100 includes a female terminal connector body 110, four female terminals 120, and a female terminal wire harness 130 (see also Fig. 2).

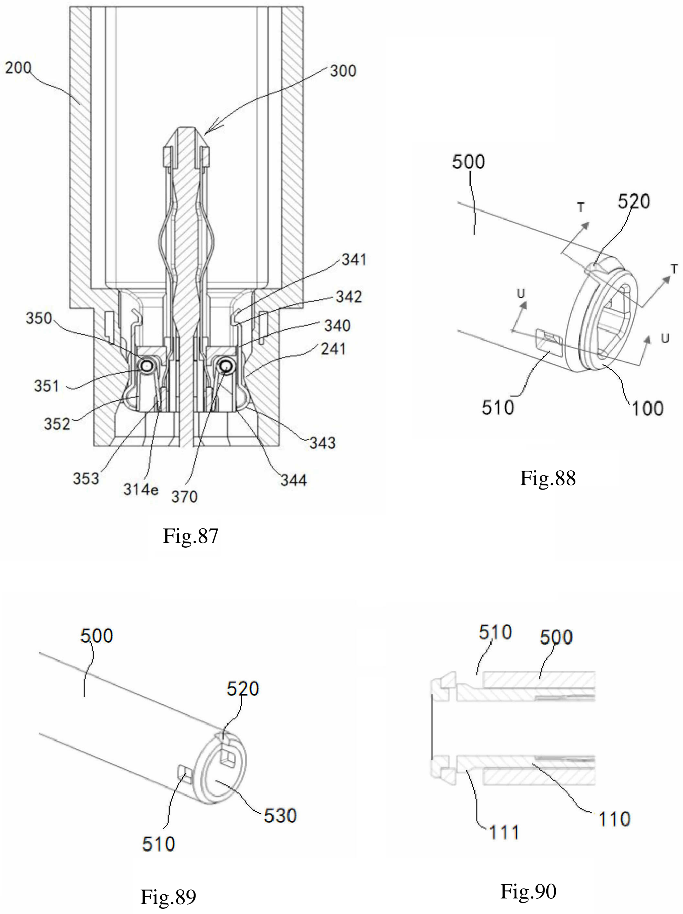

Referring specifically to Figs. 88 to 91, two mounting holes 510 and one error-proof groove 520 are provided on the circumferential direction of the headrest rod 500.

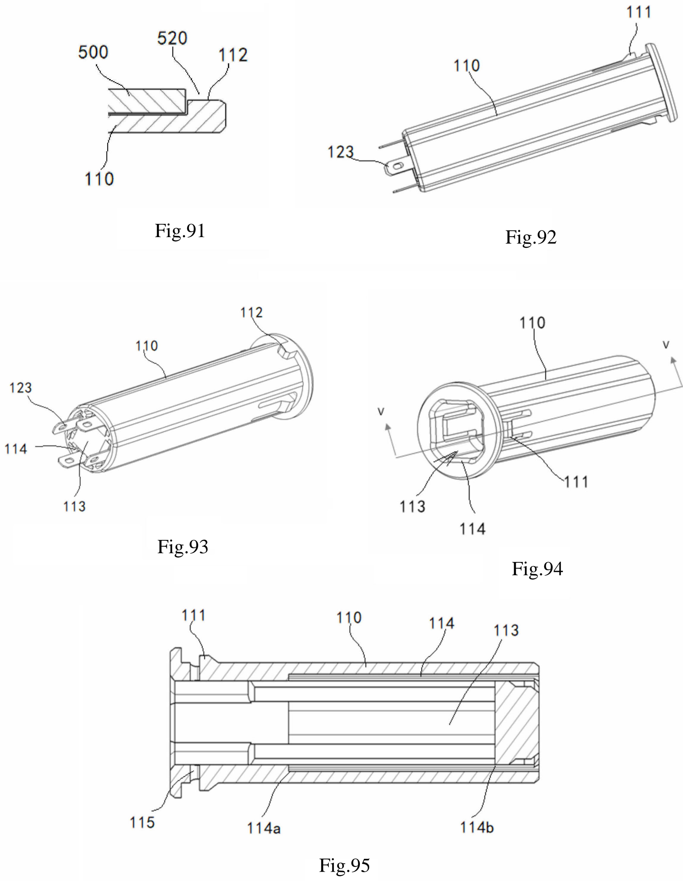

Referring specifically to Figs. 92 and 93, two snap fits 111 and one error-proof rib 112 are provided on the outer periphery of the female terminal connector body 110. After the female terminal connector 100 is inserted into the internal cavity 530 of the headrest rod 500, the two snap fits 111 are respectively snapped into the two mounting holes 510, and at the same time, the error-proof rib 112 is placed into the error-proof groove 520, so that the female terminal connector 100 is error-proofly sleeved and fixed in the internal cavity 530 of the headrest rod 500 (see also Figs. 6 and 7).

A male terminal connector insertion hole 113 is provided in the female terminal connector body 110 to facilitate the insertion of the male terminal connector 300. Four female terminal mounting portions 114 are uniformly provided circumferentially on the hole wall of the male terminal connector insertion hole 113. Limiting edges 114a, 114b are respectively provided at both ends of the female terminal mounting portion 114, and at the same time, two locking holes 115 are provided circumferentially on the female terminal connector body 110.

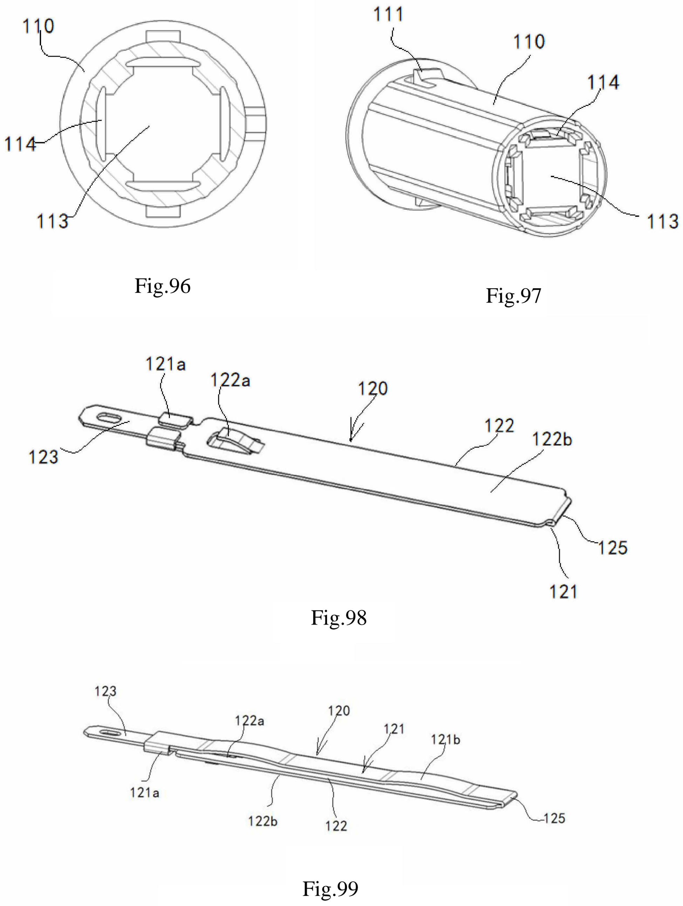

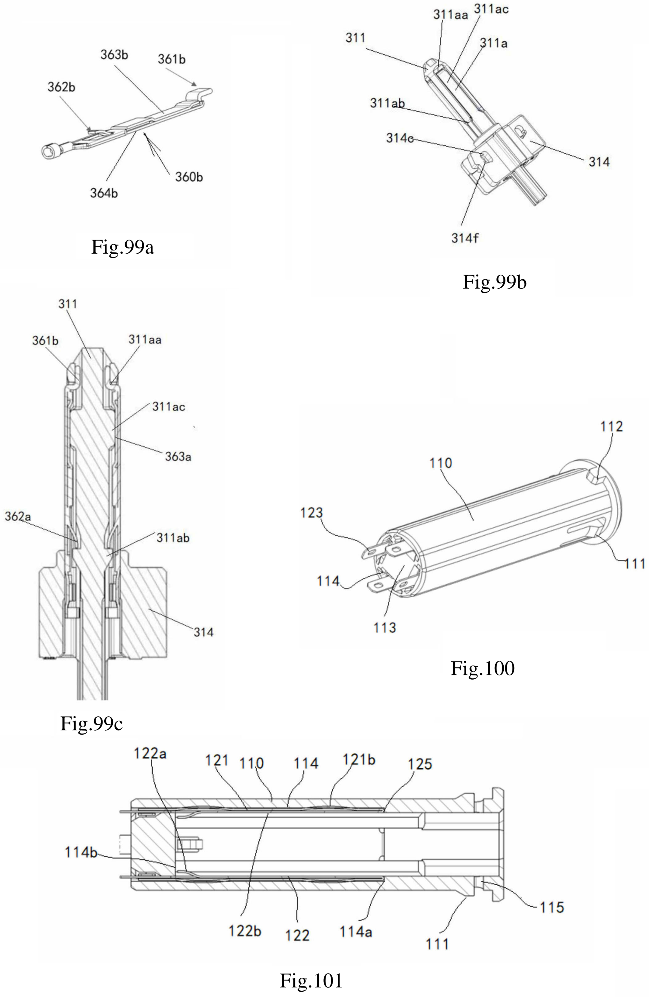

Referring specifically to Figs. 98 and 99, each female terminal 120 includes an integrally formed female terminal support portion 121 and a female terminal conductive contact portion 122. After the female terminal support portion 121 is folded from one end of the female terminal conductive contact portion 122 to a state substantially parallel to the female terminal conductive contact portion 122, it is fixedly connected to the other end of the female terminal conductive contact portion 122 through a pair of flangings 121a provided on the female terminal support portion 121. A female terminal wire harness welding portion 123 is provided at the other end of the female terminal conductive contact portion 122.

An elastic snap portion 122a is provided on the female terminal conductive contact portion 122, and two wave portions 121b are provided on the female terminal support portion 121 (of course, only one wave portion may be provided).

Referring to Figs. 99a to 99c, there are also four male terminals 360b. A positioning portion 361b is provided at one end of each male terminal 360b, an elastic snap portion 362b is provided at the other end, and a recessed portion 363b is provided between the positioning portion 361b and the elastic snap portion 362b. During assembly, the positioning portion 361b is snapped into the male terminal limiting portion 311aa, the elastic snap portion 362b contacts the male terminal limiting portion 311ab, and the male terminal 360b is axially limited in the male terminal mounting groove 311a by the male terminal limiting portions 311aa, 311ab. In addition, a convex portion 311ac is provided at the middle position of the male terminal mounting groove 311 a, and the convex portion 311ac is embedded into the recessed portion 363b, so that the male terminal 360b is better installed in the male terminal mounting groove 311a.

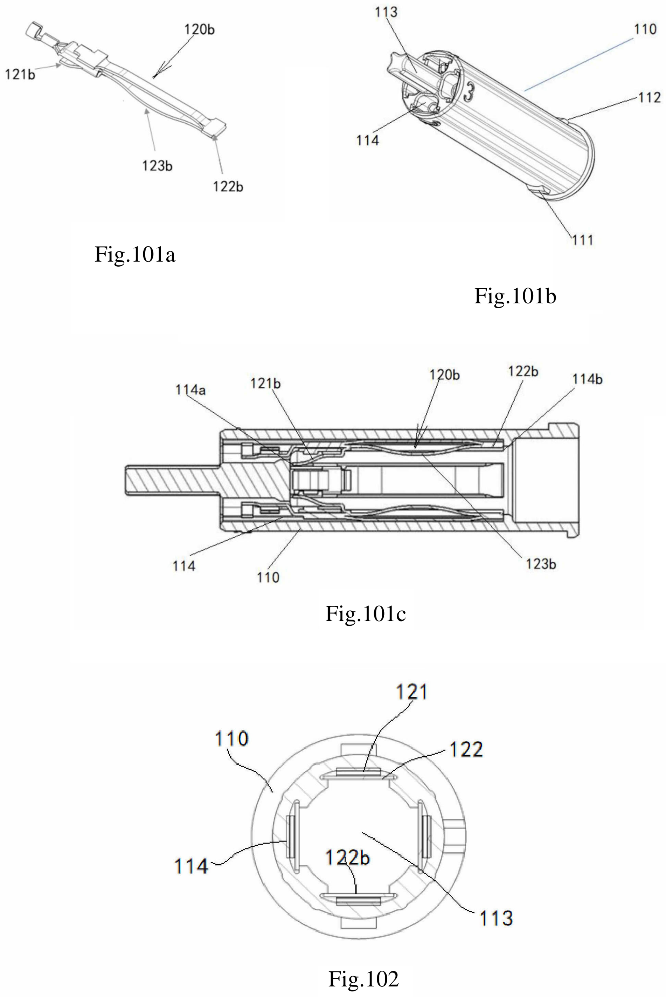

Referring to Fig. 101, the four female terminals 120 are respectively inserted into the four female terminal mounting portions 114 of the female terminal connector body 110. The folded portion 125 of the female terminal support portion 121 and the female terminal conductive contact portion 122 contacts the limiting edge 114a, and the elastic snap portion 122a contacts the limiting edge 114b of the female terminal mounting portion 114 adjacent to one end of the female terminal wire harness welding portion 123, thereby installing the female terminal 120 in the female terminal mounting portion 114 with circumferential restriction.

The two wave portions 121b on the female terminal support portion 121 contact the bottom surface 114c of the female terminal mounting portion 114, applying a certain elastic force to the female terminal conductive contact portion 122 to achieve better electrical contact with the male terminal 360 on the male terminal connector 300.

A female terminal sliding contact surface 122b is provided on the side of the female terminal conductive contact portion 122 away from the female terminal support portion 121.

The female terminal wire harness welding portion 123 extends out of the female terminal connector body 110 and is welded to the female terminal wire harness 130. The female terminal wire harness 130 passes through the internal cavity 530 of the headrest rod 500 and enters the headrest 540, and is electrically connected to the electrical components (not shown in the figure) on the headrest 540 (see also Fig. 1).

Referring to Figs. 101a to 101c, four female terminals 120b are also provided for each female terminal mounting portion 114. A snapping portion 121b is provided at one end of each female terminal 120b, and a positioning portion 122b is provided at the other end. During assembly, the snapping portion 121b contacts the limiting edge 114a, and the positioning portion 122b is inserted into the limiting edge 114b, thereby axially limiting the female terminal 120b in the female terminal mounting portion 114. In addition, an elastic contact portion 123b is provided between the snapping portion 121b and the positioning portion 122b, and the elastic contact portion 123b is in conductive contact with the sliding contact portion 364b between the positioning portion 361b of the male terminal 360b and the male terminal limiting portion 311 aa to increase the contact area between the male and female terminals, thereby increasing the overcurrent.

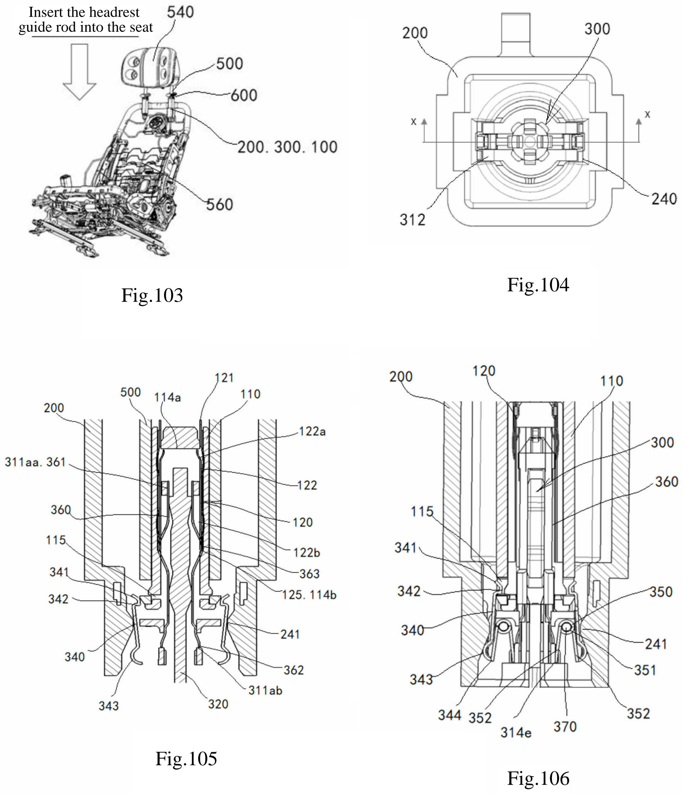

Referring to Figs. 103 to 106, when the male terminal connector 300 is inserted into the male terminal connector insertion hole 113 of the female terminal connector 100, and when the bottom of the female terminal connector body 110 of the female terminal connector 100 contacts the introduction portion 341 on the clamp spring 340, the bottom of the female terminal connector body 110 forces the introduction portion 341 on the clamp spring 340 to drive the locking portion 342 on the clamp spring 340 to expand outward, so that the bottom of the female terminal connector body 110 of the female terminal connector 100 passes over the locking portion 342 on the clamp spring 340, and the torsion spring 350 stores energy at this time. After the bottom of the female terminal connector body 110 of the female terminal connector 100 passes over the locking portion 342 on the clamp spring 340, the female terminal connector 100 continues to move downward. The locking portion 342 on the clamp spring 340 resets under the restoring force of the torsion spring 350 and is snapped into the locking hole 115 on the female terminal connector body 110, thereby automatically locking the female terminal connector 100 and the male terminal connector 300. At this time, the female terminal sliding contact surface 122b on the female terminal conductive contact portion 122 is in electrical contact with the male terminal 360 on the male terminal connector 300.

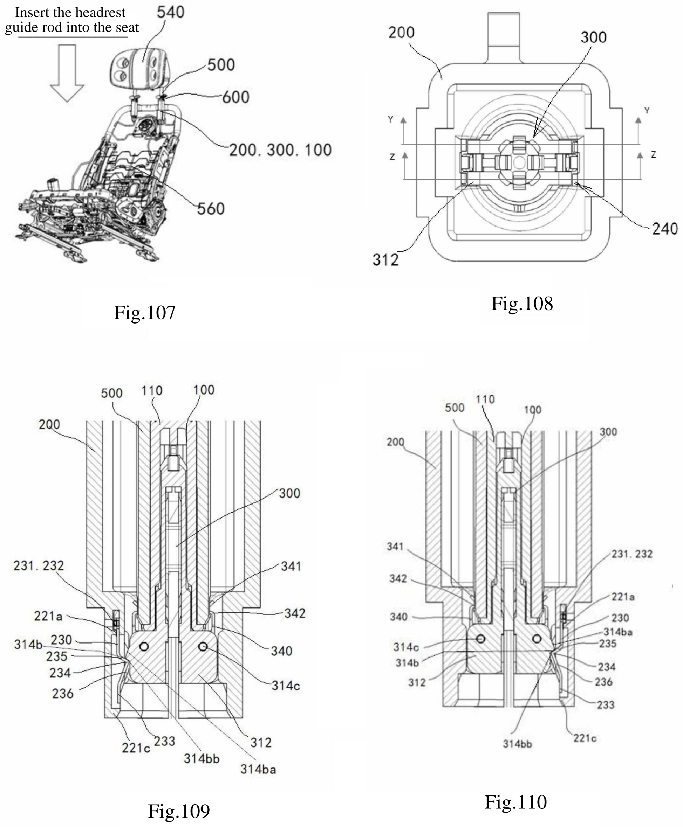

After the female terminal connector 100 and the male terminal connector 300 are automatically locked, the unlocking driving portion 343 at the lower end of the clamp spring 340 cooperates with the inclined edge portion 241 in the headrest rod sleeve assembly 200. Meanwhile, referring to Figs. 107 to 110, the upper inclined surface 235 of the elastic snap protrusion 234 on the locking piece 230 contacts the lower inclined surface 314bb of the fixing snap protrusion 314b on the male terminal connector 300, thereby limiting the male terminal connector 300 at the pre-installed position in the headrest rod sleeve assembly 200.

At this time, the elastic conductive contact portion 363 on the male terminal 360 of the male terminal connector 300 is in electrical contact with the female terminal conductive contact portion 122 of the female terminal 120 of the female terminal connector 100. While the elastic conductive contact portion 363 is in electrical contact with the female terminal conductive contact portion 122, the male terminal 360 is in electrical contact with the male terminal conductive rod 320 by virtue of the pressure of the elastic conductive contact portion 363.

Referring to Figs. 11 to 14, after the female terminal connector 100 and the male terminal connector 300 are automatically locked, the locking pin 610 in the headrest rod locking component 600 installed on the headrest rod sleeve assembly 200 is inserted into one of the locking grooves 550 of the headrest rod 500 under the action of the locking pin return spring 620 to lock the headrest rod 500.

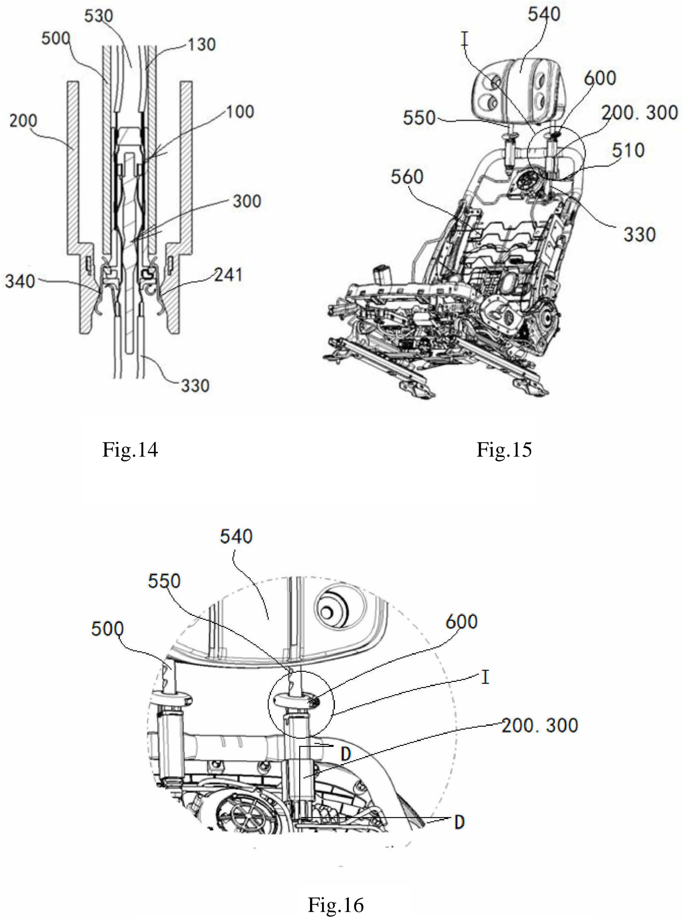

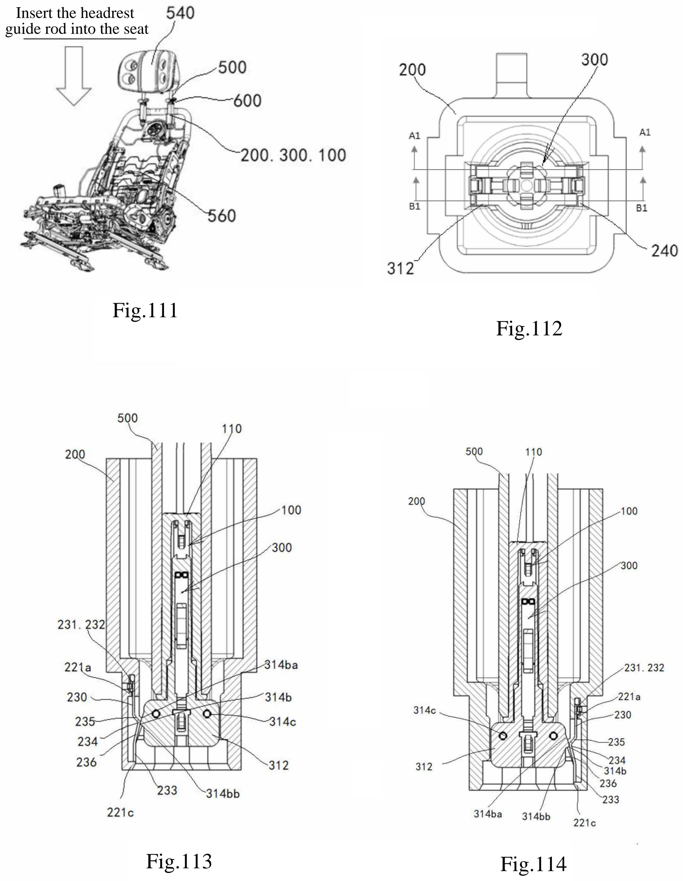

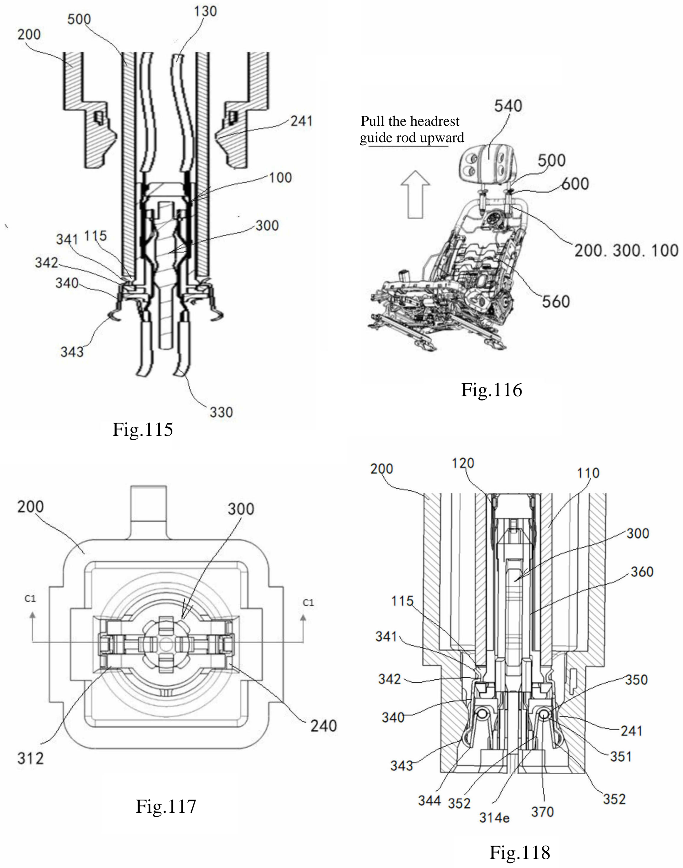

Referring to Figs. 15 to 18 and 111 to 115, when it is necessary to adjust the headrest 540 downward, the locking pin 610 is pressed outward manually to compress the locking pin return spring 620, so that the locking pin 610 exits one of the locking grooves 550 of the headrest rod 500, enabling the headrest rod 500 to be inserted further downward.

When the headrest rod 500 is inserted further downward, the lower inclined surface 314bb of the fixing snap protrusion 314b on the male terminal connector 300 forces the elastic snap protrusion 234 of the locking piece 230 to expand outward through the upper inclined surface 235 of the elastic snap protrusion 234 of the locking piece 230, so that the fixing snap protrusion 314b passes over the elastic snap protrusion 234, thereby achieving the unlocking between the male terminal connector 300 and the headrest rod sleeve assembly 200, thus, the headrest rod 500 carries the male terminal connector 300 and the female terminal connector 100 to move downward together and withdraw downward from the headrest rod sleeve assembly 200.

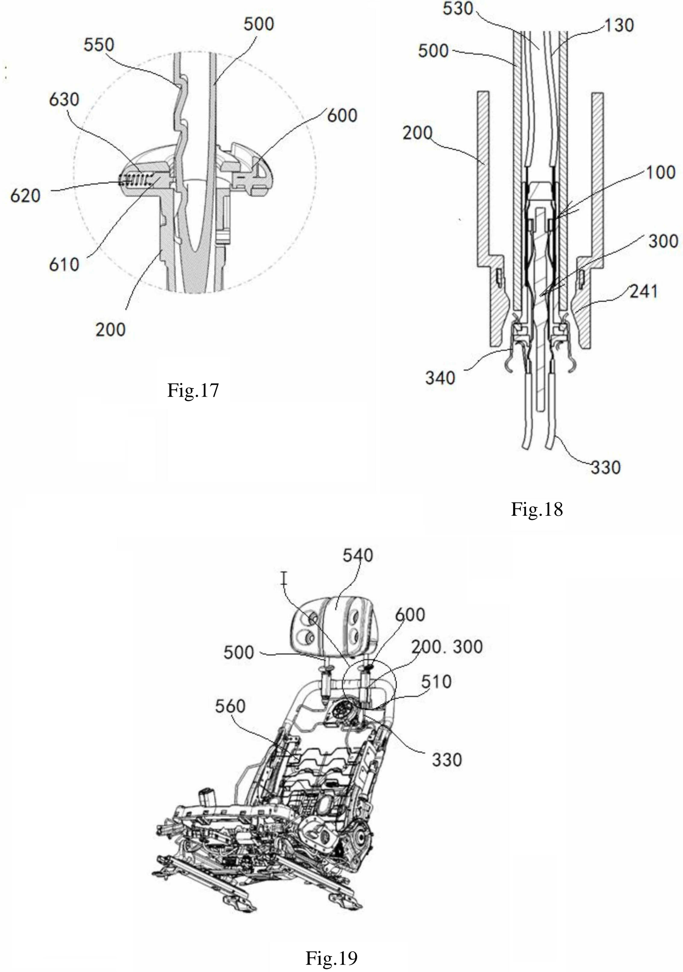

Referring to Figs. 19 to 22, after the headrest 540 is inserted to the extreme position, the locking pin 610 in the headrest rod locking component 600 is inserted into the uppermost locking groove 550 of the headrest rod 500 under the action of the locking pin return spring 620 to lock the headrest rod 500.

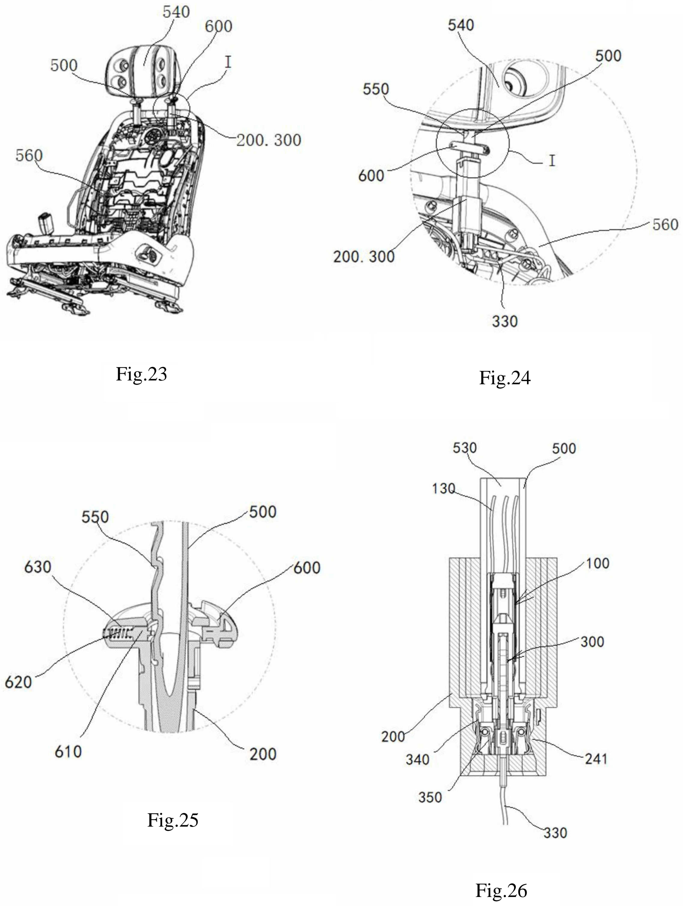

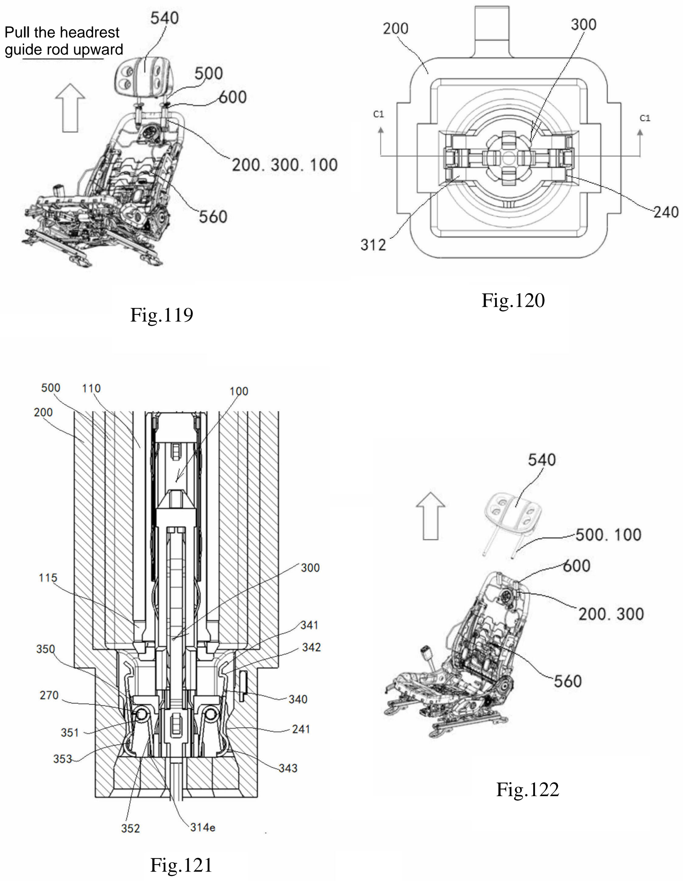

Referring to Figs. 23 to 26 and 116 to 124, when it is necessary to pull the headrest 540 out of the seat back, the headrest 540 is pulled or lifted upward by hand. The upwardly moving headrest rod 500 will press the locking pin 610 outward, compressing the locking pin return spring 620, so that the locking pin 610 exits one of the locking grooves 550 of the headrest rod 500, enabling the headrest rod 500 to be pulled out.

During the upward pulling-out process of the headrest rod 500, when the inclined edge portion 241 in the headrest rod sleeve assembly 200 touches the unlocking driving portion 343 at the lower end of the clamp spring 340, it presses the unlocking driving portion 343 to contract inward. At this time, the locking portion 342 at the upper end of the clamp spring 340 expands outward and exits the locking hole 115 on the female terminal connector body 110 of the female terminal connector 100, thereby achieving the automatic unlocking between the female terminal connector 100 and the male terminal connector 300.

After the female terminal connector 100 and the male terminal connector 300 are automatically unlocked, continuing to lift the headrest 540 drives the headrest rod 500 to continue to rise and pull out of the seat back. During the process of the headrest rod 500 continuing to rise and pull out of the seat back, it drives the female terminal connector 100 to continue to rise and pull out of the seat back, while the male terminal connector 300 remains at the pre-installed position in the headrest rod sleeve assembly 200.

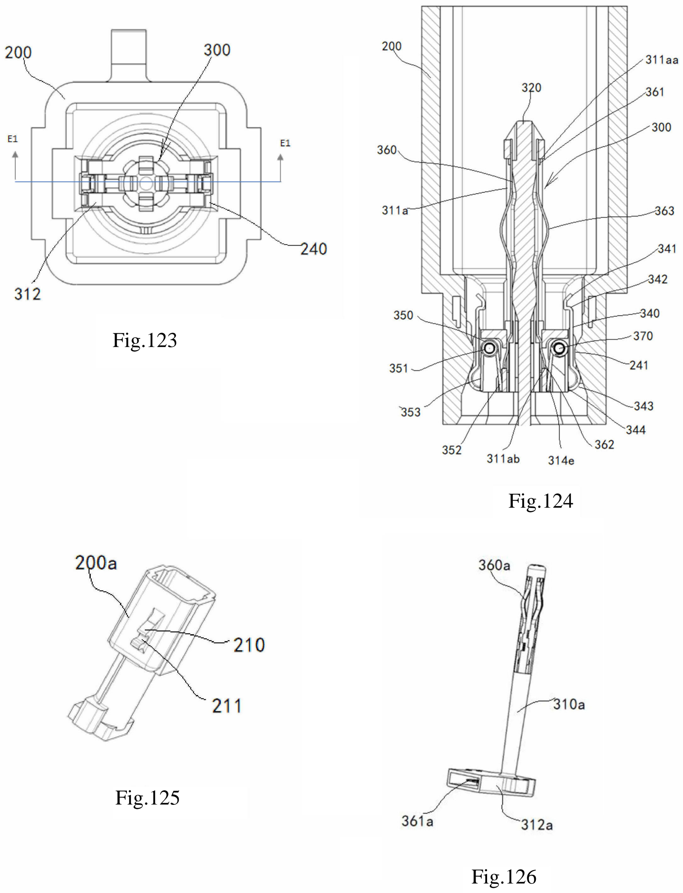

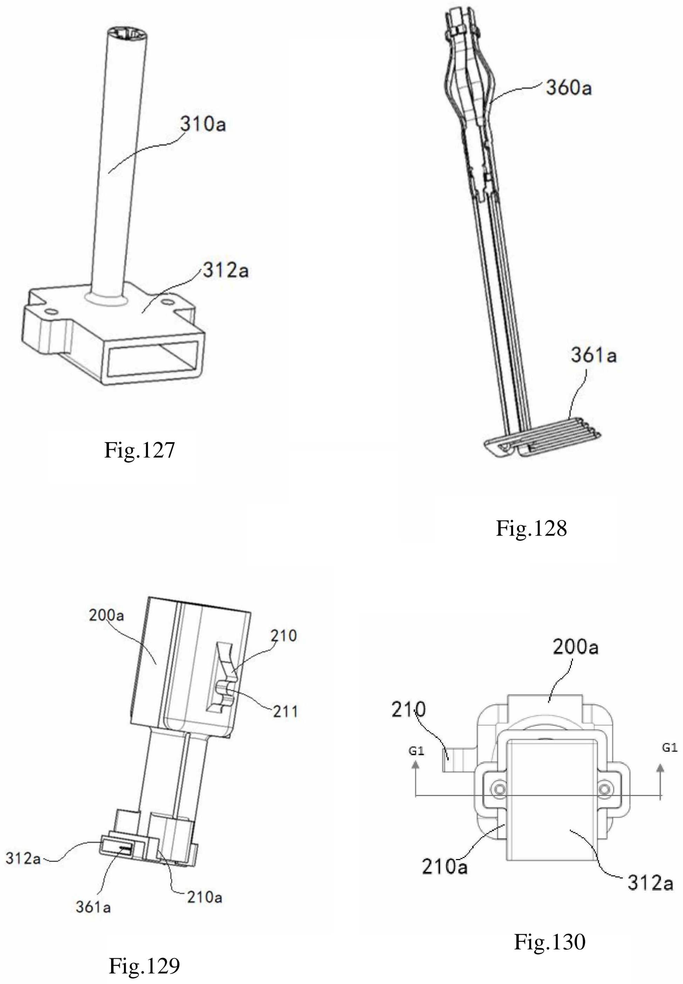

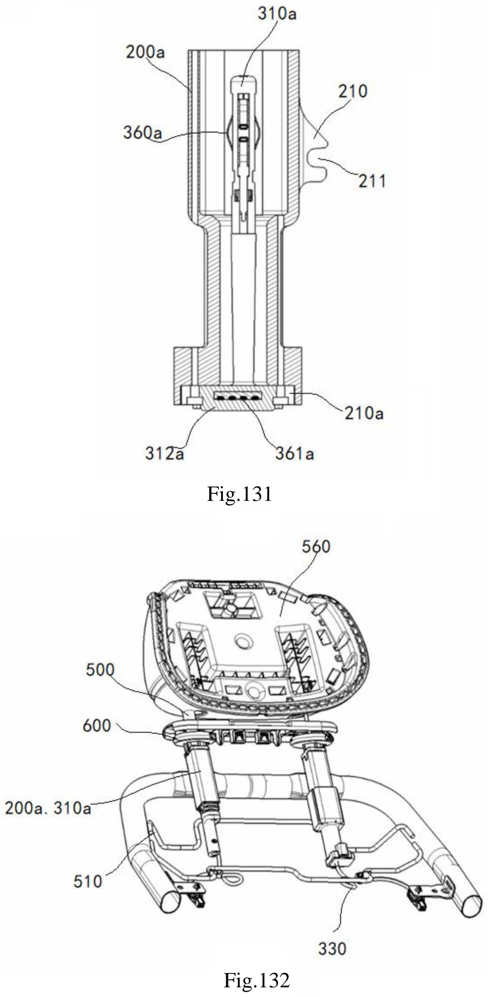

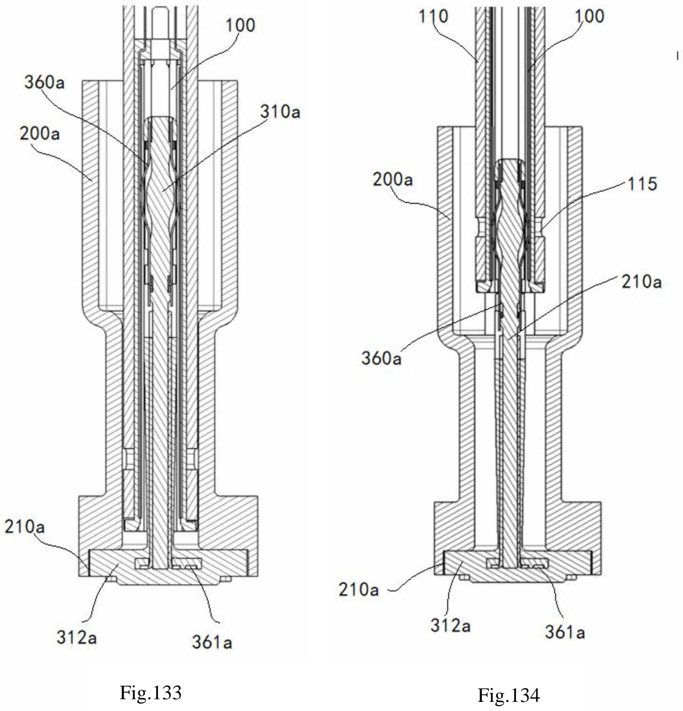

Referring to Figs. 125 to 134, another structure of the male terminal connector 300 is shown in the figures. It eliminates the male terminal conductive rod 320 and directly installs four male terminals 360a on the male terminal connector body 310a. A male terminal connection terminal 361a is formed at the bottom end of each male terminal 360a, and a male terminal connector wire outlet 312a is provided at the bottom of the male terminal connector body 310a. The male terminal connection terminals 361a at the bottom ends of the four male terminals 360a are placed into the male terminal connector wire outlet 312a. A snap-fit opening 210a is provided at the bottom of the headrest rod sleeve assembly 200a. During assembly, the male terminal connector wire outlet 312a is snapped into the snap-fit opening 210a, and the socket on the male terminal connector wire harness 330 can be inserted into the male terminal connector wire outlet 312a, so that the male terminal connector wire harness 330 is electrically connected to the four male terminals 360a.

Since the male terminal connector wire outlet 312a is snapped into the snap-fit opening 210a, after the headrest rod 500 carries the female terminal connector 100 to be sleeved on the male terminal connector 300a and locked, it can carry the male terminal connector 300a to move downward together and exit the headrest rod sleeve assembly 200a. If it is necessary to pull out the female terminal connector 100, due to the restrictive effect of the snap-fit opening 210a at the bottom of the headrest rod sleeve assembly 200a on the male terminal connector wire outlet 312a, the male terminal connector 300a will not move upward and remains at the pre-installed position in the headrest rod sleeve assembly 200a.

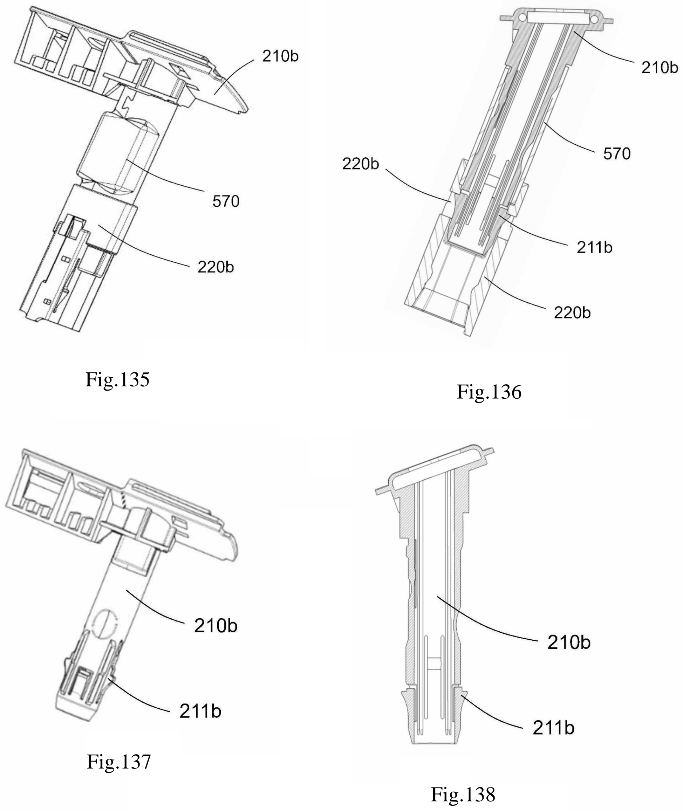

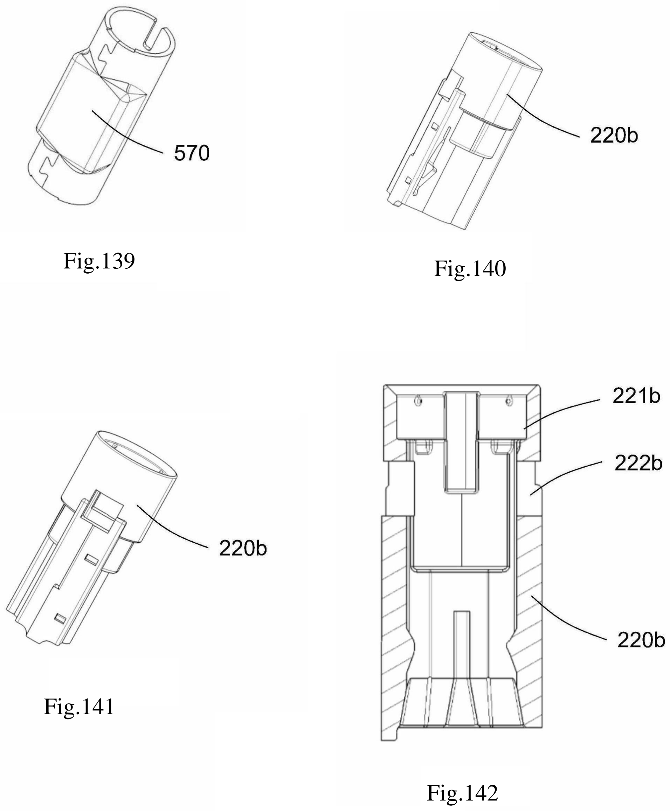

Referring to Figs. 135 to 142, different from the previous embodiment where the arc-shaped snap opening 211 of the snapping structure 210 is snapped on the steel wire 510 in the seat back frame 560 to snap and fix the headrest rod sleeve assembly 200 on the seat back, in this embodiment, the headrest rod sleeve assembly 200b includes a headrest guide sleeve 210b configured to guide the headrest rod 500 and a sleeve member 220b. By inserting the headrest guide sleeve 210b through the frame bracket 570 and sleeving the sleeve member 220b on the frame bracket 570 and the headrest guide sleeve 210b, and fixing it to the headrest guide sleeve 210b, the fixation of the headrest guide sleeve 210b and the sleeve member 220b on the frame bracket 570 can be achieved. Here, a socket connection method is adopted for fixation. The headrest guide sleeve 210b can pass through the hollow frame bracket 570 to enter the sleeve member 220b and be fixedly connected to the sleeve member 220b, wherein, in the installed state, the frame bracket 570 abuts against the headrest guide sleeve 210b and the sleeve member 220b with its respective end sides. In the installed state, the frame bracket 570 is located between the headrest guide sleeve 210b and the sleeve member 220b.

The sleeve member 220b has a hollow portion 221b at one end for receiving the frame bracket 570, and the bottom surface of the hollow portion 221b is configured to abut against the frame bracket 570. In the installed state, the side wall of the sleeve member 220b located in the area of the hollow portion 221b surrounds the frame bracket 570. The headrest guide sleeve 210b can be fixedly connected to the sleeve member 220b through a snapping structure. To this end, an opening 222b for snapping is provided in the circumferential side wall of the sleeve member 220b, and an elastically deformable snapping mechanism 211b is circumferentially provided on the headrest guide sleeve 210b. The snapping mechanism 211b is configured to be snapped into the opening 222b for snapping of the sleeve member 220b. The snapping mechanism 211b is preferably configured as an elastic snap fit.

It should be noted that the terms used herein are only for the purpose of describing specific aspects and are not intended to limit the disclosure. As used herein, the singular forms "a" and "the one" shall include the plural forms unless the context clearly indicates otherwise. It should be understood that the terms "including" and "comprising" and other similar terms, when used in the application documents, specifically indicate the existence of the stated operations, elements and/or components, but do not exclude the existence or addition of one or more other operations, elements, components and/or combinations thereof. The term "and/or" as used herein includes all any combinations of one or more related listed items. In the description of the drawings, similar reference numerals always indicate similar elements.

The thickness of elements in the drawings may be exaggerated for clarity. In addition, it can be understood that if an element is referred to as being "on", "coupled to" or "connected to" another element, the element may be directly formed on, coupled to or connected to the other element, or there may be one or more intermediate elements between them. On the contrary, if the expressions "directly on", "directly coupled to" and "directly connected to" are used herein, it means that there are no intermediate elements. Other words used to describe the relationship between elements should be interpreted similarly, such as "between" and "directly between", "attached" and "directly attached", "adjacent" and "directly adjacent", etc.

Terms such as "top", "bottom", "above", "below", "upper", "lower" and the like are used herein to describe the relationship of one element, layer or region relative to another element, layer or region as shown in the drawings. It should be understood that these terms should also include other orientations of the device in addition to the orientation described in the drawings.

It should be understood that although the terms "first", "second", etc. may be used herein to describe different elements, these elements should not be limited by these terms. These terms are only used to distinguish one element from another. Therefore, a first element may be referred to as a second element without departing from the teachings of the inventive concept.

It is also contemplated that all exemplary embodiments disclosed herein may be combined with each other arbitrarily.

Finally, it should be pointed out that the above embodiments are only used to understand the present invention and do not limit the protection scope of the present invention. For those skilled in the art, modifications can be made on the basis of the above embodiments, and these modifications do not depart from the protection scope of the present invention.

## Claims

1. A pluggable connector device, comprising a male terminal connector assembly including a headrest rod sleeve assembly, a male terminal connector, and a male terminal connector wire harness electrically connected to the male terminal connector, **characterized in that**:
the headrest rod sleeve assembly can be fixed on a seat back frame;
wherein the male terminal connector is pre-installed in the headrest rod sleeve assembly;
wherein the male terminal connector is configured to follow the female terminal connector to enter and exit the headrest rod sleeve assembly after the male terminal connector is combined with the headrest rod and the female terminal connector;
wherein the male terminal connector is further configured to return to the headrest rod sleeve assembly and be in a pre-installed state after the female terminal connector is disconnected from the male terminal connector.

2. The pluggable connector device according to claim 1, **characterized in that** at least one locking piece is installed in the headrest rod sleeve assembly, wherein the male terminal connector can be locked in the headrest rod sleeve assembly through the locking piece to keep the male terminal connector in a pre-installed state; preferably, when the male terminal connector follows the female terminal connector to extend out of the headrest rod sleeve assembly after the male terminal connector is combined with the headrest rod and the female terminal connector, the locking piece can be bounced open to disengage from contact with the male terminal connector and unlock the male terminal connector; preferably, when the male terminal connector returns to the pre-installed state after the female terminal connector is disconnected from the male terminal connector, the locking piece can elastically reset to re-lock the male terminal connector and keep the male terminal connector in the pre-installed state.

3. The pluggable connector device according to claim 2, **characterized in that** two locking pieces are provided, wherein the two locking pieces are circumferentially installed in the headrest rod sleeve assembly.

4. The pluggable connector device according to claim 2 or 3, **characterized in that** two locking piece mounting portions are circumferentially provided on the headrest rod sleeve assembly, wherein each locking piece is installed in one locking piece mounting portion respectively.

5. The pluggable connector device according to claim 4, **characterized in that** the locking piece mounting portion includes a locking piece mounting groove configured to install the locking piece therein; preferably, the locking piece mounting portion further includes a snap opening communicating with the first end of the locking piece mounting groove; wherein an elastic fixing portion is provided at the first end of the locking piece, wherein when the locking piece is installed in the locking piece mounting groove, the elastic fixing portion can be snapped into the snap opening to prevent the locking piece from falling out of the locking piece mounting groove.

6. The pluggable connector device according to claim 5, **characterized in that** a limiting portion is further provided at the first end of the locking piece, wherein a limiting rib is provided at the first end of the locking piece mounting groove; wherein after the locking piece is installed in the locking piece mounting groove, the limiting rib can contact the limiting portion to limit the movement of the locking piece in its length direction.

7. The pluggable connector device according to claim 5 or 6, **characterized in that** an outwardly protruding elastic snap protrusion is provided at the middle position of the locking piece, wherein the elastic snap protrusion can be in locking contact with the male terminal connector to keep the male terminal connector in the pre-installed position in the headrest rod sleeve assembly; preferably, when the male terminal connector follows the female terminal connector to enter and exit the headrest rod sleeve assembly after the male terminal connector is combined with the headrest rod and the female terminal connector, the elastic snap protrusion can elastically deform to disengage from contact with the male terminal connector or re-contact with the male terminal connector.

8. The pluggable connector device according to claim 7, **characterized in that** a first upper inclined surface and a first lower inclined surface are respectively provided on the upper and lower sides of the elastic snap protrusion; wherein when the male terminal connector contacts and acts with the first upper inclined surface, it can drive the elastic snap protrusion to deform, and make the elastic snap protrusion disengage from contact with the male terminal connector, enabling the male terminal connector to follow the female terminal connector to exit the headrest rod sleeve assembly; wherein when the male terminal connector contacts and acts with the first lower inclined surface, it can drive the elastic snap protrusion to deform, enabling the male terminal connector to pass over the elastic snap protrusion, return to the pre-installed state, and be confined to the pre-installed position by the elastic snap protrusion.

9. The pluggable connector device according to claim 8, **characterized in that** a limiting groove is provided in the locking piece mounting groove, wherein the limiting groove is adapted to the shape of the elastic snap protrusion; wherein the elastic snap protrusion can be limited to move within the limiting groove so as to prevent the elastic snap protrusion from popping out excessively.

10. The pluggable connector device according to claim 5 or 6, **characterized in that** the second end of the locking piece opposite to the first end is a free end.

11. The pluggable connector device according to claim 8, **characterized in that** the male terminal connector includes a male terminal connector body having a male terminal mounting portion and a wire harness connecting portion; wherein the male terminal wire harness can be electrically connected to the wire harness connecting portion; wherein at least one fixing snap protrusion is provided on the outer periphery of the wire harness connecting portion, wherein the fixing snap protrusion can cooperate with the elastic snap protrusion to limit the male terminal connector in the pre-installed position; wherein when the male terminal connector follows the female terminal connector to enter and exit the headrest rod sleeve assembly, the fixing snap protrusion can drive the elastic snap protrusion to deform.

12. The pluggable connector device according to claim 11, **characterized in that** a second upper inclined surface and a second lower inclined surface are respectively provided on the upper and lower sides of the fixing snap protrusion; wherein when the second lower inclined surface contacts the first lower inclined surface, the male terminal connector can be limited in the pre-installed position; preferably, when the male terminal connector is to exit the headrest rod sleeve assembly following the female terminal connector, the second lower inclined surface can drive the locking piece to expand outward through the first lower inclined surface, so that the fixing snap protrusion disengages from the limit of the elastic snap protrusion, thereby enabling the male terminal connector to follow the female terminal connector to exit the headrest rod sleeve assembly; preferably, when the male terminal connector re-enters the headrest rod sleeve assembly following the female terminal connector and the second upper inclined surface contacts the first lower inclined surface, the second upper inclined surface can drive the locking piece to expand outward through the first lower inclined surface, so that the fixing snap protrusion passed over the elastic snap protrusion, thereby returning the male terminal connector to the pre-installed position.

13. The pluggable connector device according to claim 11 or 12, **characterized in that** the male terminal connector wire harness can be inserted into the wire harness connecting portion and tightened or clamped by a cable tie or a clamp.

14. The pluggable connector device according to claim 11 or 12, **characterized in that** at least one guide groove is provided in the headrest rod sleeve assembly, wherein the locking piece mounting groove is provided in the guide groove; wherein at least one guide structure is provided on the outer periphery of the wire harness connecting portion, wherein the fixing snap protrusion is provided on the guide structure, wherein the guide structure can move in the guide groove.

15. The pluggable connector device according to claim 14, **characterized in that** a spring mounting groove is provided in the guide structure, wherein a clamp spring and a torsion spring are hinged in the spring mounting groove; wherein one end of the torsion spring acts on the guide structure, and the other end of the torsion spring acts on the clamp spring; wherein when the torsion spring is released, it can drive the clamp spring to lock the female terminal connector, so that the female terminal connector is combined with the male terminal connector; wherein when the female terminal connector needs to be disconnected from the male terminal connector, the clamp spring can disengage from the locking connection with the female terminal connector under the action of external force, and the torsion spring stores energy at this time.

16. The pluggable connector device according to claim 15, **characterized in that** an introduction portion and a locking portion are provided at one end of the clamp spring; wherein when viewed in the vertical direction in the installed state, the introduction portion is located above the locking portion; wherein when the male terminal connector is inserted into the female terminal connector, the female terminal connector can drive one end of the clamp spring to expand outward through the introduction portion, so that the female terminal connector passes over the locking portion, such that the female terminal connector is fully combined with the male terminal connector and locked by the locking portion.

17. The pluggable connector device according to claim 16, **characterized in that** an unlocking driving portion is provided at the other end of the clamp spring, wherein an inclined edge portion is provided in the spring mounting groove; wherein when the inclined edge portion interacts with the unlocking driving portion, on the one hand, it can limit the male terminal connector in the pre-installed position, and on the other hand, it can drive one end of the clamp spring to move in the unlocking direction through the unlocking driving portion, so that the locking portion disengages from the locking connection with the female terminal connector; preferably, under the action of the torsion spring, the unlocking driving portion provided at the lower end of the clamp spring can contact the inclined edge portion in the spring mounting groove, thereby limiting the upward movement of the male terminal connector; preferably, during the upward pulling of the headrest rod, when the inclined edge portion in the spring mounting groove touches the unlocking driving portion provided at the lower end of the clamp spring, it can press the unlocking driving portion to contract inward, thereby expanding the locking portion provided at the upper end of the clamp spring outward, so that the locking portion disengages from the locking connection with the female terminal connector; preferably, the unlocking driving portion is of an arc structure.

18. The pluggable connector device according to claim 11 or 12, **characterized in that** a conductive rod mounting hole is provided in the male terminal mounting portion and the wire harness connecting portion; wherein a male terminal conductive rod can be inserted into the conductive rod mounting hole; wherein the section of the male terminal conductive rod inserted into the male terminal mounting portion is electrically connected to the female terminal connector, wherein the section of the male terminal conductive rod inserted into the wire harness connecting portion is electrically connected to the male terminal connector wire harness.

19. The pluggable connector device according to claim 18, **characterized in that** at least one male terminal mounting groove is circumferentially provided on the male terminal mounting portion; wherein the male terminal mounting groove is radially communicated with the conductive rod mounting hole and communicated with the outside of the male terminal mounting portion, wherein the male terminal mounting groove extends along the axial direction of the conductive rod mounting hole; preferably, a male terminal is installed in the male terminal mounting groove, wherein the male terminal is configured to be electrically connected to the male terminal conductive rod on the one hand and to the female terminal connector on the other hand.

20. The pluggable connector device according to claim 19, **characterized in that** one end of the male terminal mounting groove extends into the wire harness connecting portion; preferably, male terminal limiting portions are provided at both ends of the male terminal mounting groove, and the male terminal can be axially limited in the male terminal mounting groove by the male terminal limiting portions at both ends of the male terminal mounting groove.

21. The pluggable connector device according to claim 20, **characterized in that** a snapping edge is provided at one end of the male terminal, and an elastic snap portion is provided at the other end of the male terminal; wherein the snapping edge and the elastic snap portion can respectively contact the male terminal limiting portions at both ends of the male terminal mounting groove to axially limit the male terminal in the male terminal mounting groove.

22. The pluggable connector device according to any one of claims 19 to 21, **characterized in that** an elastic conductive contact portion is provided at the middle position of the male terminal; wherein the elastic conductive contact portion can be electrically connected to the female terminal connector; wherein while the elastic conductive contact portion is electrically connected to the female terminal connector, the male terminal is electrically connected to the male terminal conductive rod by virtue of the pressure of the elastic conductive contact portion.

23. The pluggable connector device according to claim 1 or 2, **characterized in that** a headrest rod locking component is fixedly installed on the headrest rod sleeve assembly; wherein a locking pin mounting hole is provided in the headrest rod locking component; wherein a locking pin and a locking pin return spring are press-fitted in the locking pin mounting hole; wherein one end of the locking pin return spring acts on the locking pin, and the other end of the locking pin return spring acts on the headrest rod locking component.

24. The pluggable connector device according to claim 1, **characterized in that** the male terminal connector includes a male terminal connector body, at least one male terminal installed on the male terminal connector body, and a male terminal connector wire harness; wherein a male terminal connection terminal is formed at the bottom end of each male terminal; preferably, a male terminal connector wire outlet is provided at the bottom of the male terminal connector body, wherein the male terminal connection terminal at the bottom end of the male terminal can be placed into the male terminal connector wire outlet; preferably, a snap-fit opening is provided at the bottom of the headrest rod sleeve assembly; during assembly, the male terminal connector wire outlet can be snapped into the snap-fit opening, wherein the socket on the male terminal connector wire harness can be inserted into the male terminal connector wire outlet, so that the male terminal connector wire harness is electrically connected to the male terminal.

25. The pluggable connector device according to claim 1 or 2, **characterized in that** the pluggable connector device further includes a female terminal connector which can be installed on the headrest rod; wherein after the male terminal connector is inserted into the female terminal connector and combined with the female terminal connector, electrical contact connection can be performed between the male terminal connector and the female terminal connector.

26. The pluggable connector device according to claim 25, **characterized in that** the female terminal connector includes a female terminal connector body, at least one female terminal installed on the female terminal connector body, and a female terminal wire harness electrically connected to the female terminal; wherein the female terminal connector body can be sleeved and fixed in the internal cavity of the headrest rod; wherein the female terminal wire harness can pass through the internal cavity of the headrest rod to enter the headrest and be electrically connected to the electrical components provided at the headrest.

27. The pluggable connector device according to claim 26, **characterized in that** at least one snap fit is provided on the outer periphery of the female terminal connector body; at least one mounting hole is circumferentially provided on the headrest rod; the snap fit can be snapped into the mounting hole, so that the female terminal connector body is sleeved and fixed in the internal cavity of the headrest rod.

28. The pluggable connector device according to claim 26 or 27, **characterized in that** an error-proof rib is provided on the female terminal connector body, wherein an error-proof groove is provided on the headrest rod; wherein the error-proof rib can be placed into the error-proof groove, so that the female terminal connector body is error-proofly sleeved and fixed in the internal cavity of the headrest rod.

29. The pluggable connector device according to claim 26 or 27, **characterized in that** a male terminal connector insertion hole is provided in the female terminal connector body, wherein the male terminal connector can be inserted into the male terminal connector insertion hole; preferably, at least one female terminal mounting portion is circumferentially provided on the hole wall of the male terminal connector insertion hole; wherein the female terminal can be installed in the female terminal mounting portion; wherein after the male terminal connector is inserted into the male terminal connector insertion hole, the female terminal can be electrically connected to the male terminal on the male terminal connector.

30. The pluggable connector device according to claim 29, **characterized in that** limiting edges are respectively provided at both ends of the female terminal mounting portion; wherein the female terminal can be axially limited in the female terminal mounting portion by the limiting edges at both ends of the female terminal mounting portion.

31. The pluggable connector device according to claim 29, **characterized in that** the female terminal includes an integrally formed female terminal support portion and a female terminal conductive contact portion; wherein after the female terminal support portion is folded from one end of the female terminal conductive contact portion to a state substantially parallel to the female terminal conductive contact portion, the female terminal support portion is fixed on the other end of the female terminal conductive contact portion; wherein the female terminal support portion can contact the female terminal mounting portion, wherein the female terminal conductive contact portion can be electrically connected to the male terminal on the male terminal connector; preferably, a female terminal wire harness welding portion is provided at the other end of the female terminal conductive contact portion; wherein the female terminal wire harness welding portion extends out of the female terminal connector body and is welded to the female terminal wire harness.

32. The pluggable connector device according to claim 31, **characterized in that** the female terminal support portion is fixedly connected to the other end of the female terminal conductive contact portion through a flanging provided on the female terminal support portion.

33. The pluggable connector device according to claim 31 or 32, **characterized in that** an elastic snap portion is provided on the female terminal conductive contact portion; wherein the elastic snap portion can contact the limiting edge of the female terminal mounting portion adjacent to one end of the female terminal wire harness welding portion.

34. The pluggable connector device according to claim 31 or 32, **characterized in that** at least one wave portion is provided on the female terminal support portion; wherein the wave portion can contact the female terminal mounting portion to apply a certain elastic force to the female terminal conductive contact portion, thereby achieving better electrical contact with the male terminal on the male terminal connector.

35. The pluggable connector device according to claim 16 or 17, **characterized in that** the pluggable connector device further includes a female terminal connector which can be installed on the headrest rod; wherein after the male terminal connector is inserted into the female terminal connector and combined with the female terminal connector, electrical contact connection can be performed between the male terminal connector and the female terminal connector; wherein the female terminal connector includes a female terminal connector body which can be sleeved and fixed in the internal cavity of the headrest rod; wherein at least one locking hole is circumferentially provided on the female terminal connector body; wherein after the male terminal connector is inserted into the male terminal connector insertion hole, the locking portion at one end of the clamp spring in the male terminal connector can be embedded into the locking hole to lock the male terminal connector and the female terminal connector together; wherein during unlocking, the locking portion at one end of the clamp spring in the male terminal connector can exit the locking hole to realize unlocking.

36. The pluggable connector device according to claim 1, **characterized in that** the headrest rod sleeve assembly can be snapped and fixed on the seat back frame.

37. The pluggable connector device according to claim 1, **characterized in that** the headrest rod sleeve assembly includes a headrest guide sleeve and a sleeve member, wherein the headrest guide sleeve is configured to guide the headrest rod; wherein, the headrest guide sleeve and the sleeve member can be fixed at the frame bracket through the socket connection between the headrest guide sleeve, the hollow frame bracket and the sleeve member.

38. The pluggable connector device according to claim 37, **characterized in that** the headrest guide sleeve can pass through the hollow frame bracket to enter the sleeve member and be fixedly connected to the sleeve member; wherein in the installed state, the frame bracket abuts against the headrest guide sleeve and the sleeve member with its respective end sides, thereby realizing the socket limit fixation of the headrest rod sleeve assembly.

39. The pluggable connector device according to claim 38, **characterized in that** the sleeve member has a hollow portion at one end for receiving the frame bracket, wherein the bottom surface of the hollow portion is configured to abut against the frame bracket; wherein in the installed state, the side wall of the sleeve member located in the area of the hollow portion surrounds the frame bracket.

40. The pluggable connector device according to claim 38 or 39, **characterized in that** an opening for snapping is provided in the circumferential side wall of the sleeve member, wherein an elastically deformable snapping mechanism is circumferentially provided on the headrest guide sleeve; wherein the snapping mechanism is configured to be snapped into the opening for snapping of the sleeve member; preferably, the snapping mechanism is configured as an elastic snap fit.

41. A vehicle seat, **characterized by** comprising the pluggable connector device according to any one of claims 1 to 40.
